(19) Europäisches Patentamt
European Patent Office
Office européen des brevets

(11) **EP 4 361 944 A1**

(12) **EUROPEAN PATENT APPLICATION**

(43) Date of publication:
**01.05.2024 Bulletin 2024/18**

(21) Application number: **22306652.3**

(22) Date of filing: **31.10.2022**

(51) International Patent Classification (IPC):
***G06T 7/00*** *(2017.01)*

(52) Cooperative Patent Classification (CPC):
**G06T 7/0012;** G06T 2207/10056;
G06T 2207/10064; G06T 2207/10088;
G06T 2207/20076; G06T 2207/20084;
G06T 2207/30024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Sartorius Stedim Data Analytics AB
903 33 Umeå (SE)**
• **UNIVERSITE CLAUDE BERNARD - LYON 1
69100 Villeurbanne (FR)**
• **Institut National des Sciences Appliquées de
Lyon
69621 Villeurbanne Cedex (FR)**
• **Ecole Superieure de Chimie Physique
Electronique de Lyon
69616 Villeurbanne, Cedex (FR)**

• **Centre national de la recherche scientifique
75016 Paris (FR)**

(72) Inventors:
• **SJÖGREN, Rickard
90441 Röbäck (SE)**
• **REIF, Oscar-Werner
37079 Göttingen (DE)**
• **TRYGG, Johan
903 33 Umeå (SE)**
• **PETIOT, Emma
75016 Paris (FR)**
• **MARQUETTE, Christophe
75016 Paris (FR)**
• **CHASTAGNIER, Laura
69100 Villeurbanne (FR)**

(74) Representative: **Mewburn Ellis LLP
Aurora Building
Counterslip
Bristol BS1 6BX (GB)**

(54) **MONITORING OF BIOFABRICATION PROCESSES**

(57)    Methods for monitoring a process for producing multicellular structures from a cell population in a 3D cell culture are described. The methods comprise obtaining one or more 3D images of the 3D cell culture that are acquired by imaging the cell culture at different depths and/or from different angles, processing the one or more images to obtain a plurality of image-derived features, and determining the value of one or more metrics indicative of the progress or outcome of the maturation process using a statistical model adapted to predict the values of the one or more metrics indicative of the progress or outcome of the maturation process using inputs comprising the plurality of image-derived features. Related methods, systems and products are also described.

Fig. 1

**EP 4 361 944 A1**

## Description

<u>Field of the Present Disclosure</u>

The present disclosure relates to methods for monitoring a process for producing multicellular structures, and in particular to monitor the maturation of cells in a 3D cell culture into multicellular structures, using statistical modelling and imaging data. Related methods, systems and products are described.

<u>Background</u>

The development of processes to produce complex multicellular structures such as tissues and organoids from living cells *in vitro* (sometimes referred to as "biofabrication") is opening new possibilities for regenerative medicine, tissue engineering, disease modelling, drug developments and many other applications. However, these processes are complex and the nature, composition and functionality of the resulting multicellular structures, if such structures can even be successfully obtained, is influenced by many technical parameters. As these are all crucial to the ultimate use of the multicellular structures that are the product of these bioprocesses, very complex and extensive optimization processes are frequently needed for any specific production process. For example, there are many different biofabrication techniques available, including bioprinting methodologies such as extrusion or inkjet bioprinting (where bioinks comprising a matrix and cells are 3D printed), as well as 3D cultures in biomaterials that are molded or otherwise deposited followed by cell seeding (e.g. molding or deposition of cells into proliferative biomaterials such as Matrigel cultures, collagen hydrogels etc.). Each of these approaches is associated with a choice of process parameters that may influence the outcome of the biofabrication process. For example, Zhang et al. (Nat. Rev. Methods Primer, vol. 1, no. 1, pp. 1-20, Nov. 2021) reviewed key process parameters that can influence the outcome of biofabrication using extrusion bioprinting. These include the bioink biomaterial (such as type, origin, and concentration of biomaterial as well as the procedure used for synthesis and crosslinking of the biomaterial), the bioink cells (such as type, origin of cell(s), cell culture medium and conditions, passage number, printed density, whether the cells are used as a co-culture), the hardware used (such as type and model, whether extrusion is pneumatic or mechanical, what type of nozzle is used, its diameter and geometry, printing conditions such as temperatures of cartridge, printhead and substrate), the bioprinting procedure used (such as extrusion speed and pressure, nozzle movement speed, printing path planning, ambient conditions during printing, bioink temperature, bioink flow during printing, crosslinking solution concentration, type, time of exposure, etc. ), and the postprocessing procedure (such as tissue culture or maturation conditions including cultivation duration, culture medium, liquid or air/liquid conditions).

Many of these parameters not only influence the 3D structure of the printed sample but also influence cell physiology, cell viability and consequently the 3D culture faith. For instance, the shear stress that cells experience during printing by micro-extrusion or inkjet technologies is a consequence of the bioink flow speed during printing, the nozzle shape and rheological properties of the bioink. Furthermore, there is no general configuration suitable for all types of printed tissues, organoids, cell types and considerable optimization efforts are needed for new processes. Similarly, even the identification of a suitable culture medium formulation is itself a multifactorial optimization problem. For instance, media formulation with growth factors, vitamins, hormones, trace elements need to be optimized to improve cell viability, promote robust growth and maturation, and maintain phenotype. Additionally, for biofabrication of complex multicellular structures such as tissues or organoids, several different cell types (most commonly between 2 and 4 or more cell types) have to be co-cultured, each of which have specific needs in term of nutritive feed and growth factors. In such case, selection/optimization of culture media composition is both extremely challenging and crucial to obtaining a functional product.

Adding to these challenges, the process of maturation from a cell culture comprising single cells or groups of cells (e.g. spheroids) to a product that is a complex multicellular structure (e.g. a tissue or organoid) can take weeks (typically 2 to 5 weeks). Conventionally, process monitoring for example for optimization or quality control is performed by conducting maturation for a period of time sufficient to evaluate the product of the bioprocess (where this is largely determined subjectively by expert knowledge and often conservatively long), then the process is arrested and the sample is analyzed using destructive analytic methods. This makes optimization slow and extremely onerous. This is also not ideally suited for monitoring of the maturation process after the optimization phase, whether for early quality control or for active control of the bioprocess, as the analysis is destructive and performed a *posteriori*.

Therefore, a need exists for improved systems and methods for monitoring biofabrication processes, which do not suffer from all of the drawbacks of the prior art.

<u>Summary</u>

The present inventors hypothesised that it may be possible to monitor and predict the outcome of a maturation process occurring in a 3D cell culture using multivariate statistical modelling applied to metrics obtained by analysing images collected during the maturation process. These metrics may be indicative of cellular or morphological features of cell populations visible in images and/or associated with markers indicative of the local environment in the 3D cultures. Indeed, the present inventors have recognised that trained humans are able to look at 2D cell cultures under e.g. bright-field or phase contrast microscope and get a "feel" for the state of a cell population. This process is subjective, labour-intensive, and crucially lacks reproducibility and objective quantification which makes it unsuitable for implementation of a rigorous quality controlled industrial process. Further, this approach is very limited in the case of 3D cultures where spatial heterogeneity makes expert judgment even more unreliable. In the context of bioprinting, machine learning approaches have been suggested to predict the impact of printing process parameters on the quality of the printed product (e.g. cell damage) (Yu and Jiang, Int. J. Bioprinting, vol. 6, no. 1, p. 253, Jan. 2020), or to monitor the printing process itself using deep learning-based computer vision (Ng etal., Prototyp., vol. 15, no. 3, pp. 340-358, Jul. 2020). However, these approaches focus exclusively on the printing process and how that influences the printed object. They are unable to take into account parameters of the process as a whole that influence the final outcome of a biofabrication process (i.e. the production of a multicellular structure). The inventors have identified that focussing on printing parameters exclusively would fail to accurately capture the features of a matured multicellular structure or maturing cell culture as these depend on so many additional parameters beyond printing parameters. They have further recognised that due to the extreme complexity and size of the parameter space for the process as a whole, machine learning approaches that focus primarily on process parameters would crucially lack flexibility as any tweak to the process may require the inclusion of new parameters in a predictive model, requiring re-training of the model with new data, and in turn negating much of the savings associated with using predictive modelling in lieu of extensive experimental optimisation.

The present inventors however postulated that rigorous and flexible methods could be developed which exploited the information content in 3D images of cell cultures. They developed methods using computer-implemented analysis of microscope images of maturing 3D cell cultures that are able to pick out and quantify features that are informative of the cells and cellular structural morphology, function and identity, and/or the cells environment, and integrate these into a statistical model that captures the relationship between these features and metrics that characterise the progress and quality of the maturation process. As a result, they provide methods that are able to predict and monitor the progress and quality of a mutation process of a biofabricated multicellular culture from images of the maturing cell culture. These methods do not suffer the drawbacks of the currently used approaches to monitor, control or optimise a maturation process as they do not require the use of destructive techniques to monitor or control the biofabrication process, enable faults in the process to be identified and potentially corrected before termination of the maturation process. Further, they provide a solution (trained statistical model) that can be used for a plurality of processes from which images can be collected, where these processes may not be defined or definable by the same set of process parameters. For example, the solution may enable the monitoring of a bioprocess for production of a multicellular structure using alternative workflows for the production of the cellularised structure from which the multicellular structure is obtained by maturation. For example, a maturation process from a printed cellularised structure can be compared to a maturation process from a moulded cellularised structure with the same trained statistical model. This is not possible using existing predictive methods.

According to a first aspect of the disclosure, there is provided a method for monitoring a process for producing multicellular structures from a cell population in a 3D cell culture, the method comprising: obtaining one or more images of the 3D cell culture that are acquired by imaging the cell culture at different depths and/or from different angles, processing the one or more images to obtain a plurality of image-derived features, and determining the value of one or more metrics indicative of the progress or outcome of the maturation process using a statistical model adapted to predict the values of the one or more metrics indicative of the progress or outcome of the maturation process using inputs comprising the plurality of image-derived features.

The method of the first aspect may have any one or any combination of the following optional features.

An image acquired by imaging a sample at different depths and/or from different angles may also be referred to herein as a "3D image".

Obtaining one or more 3D images of the 3D cell culture may comprise obtaining a plurality of images acquired at a respective plurality of time points during the maturation process of the cell population. The statistical model may be adapted to predict the values of one or more metrics indicative of the progress or outcome of the maturation process using inputs comprising the plurality of image-derived features obtained at a plurality of time points during the maturation process.

A maturation process may be a process whereby a population of cells comprising individual cells or groups of cells undergo proliferation and specialisation to produce a multicellular structure. The method may further comprise maintaining the cell culture in conditions compatible with maturation of the cell population. The 3D cell culture may be maintained in culture for at least 5, at least 10, at least 15 or at least 20 days. One or more images of the 3D cell culture may be acquired after 1 day, 2 days, 3 days, 4 days, 5 days, 10 days, 15 days, or at regular intervals while the cell culture is maintained in conditions compatible with maturation of the cell population for at least 5 days, at least 10 days, at least 15 days, at most 20 days, at most 25 days, at most 30 days or at most 35 days.

A maturation process may take place over the course of at least 5 days, at least 10 days, at least 15 days, at least 20 days, or 25 days or more. When obtaining training data, the cell culture may be maintained until completion of the maturation process, such as for at least 10 days, at least 15 days, at least 20 days, or 25 days or more. When obtaining data for the purpose of monitoring, controlling or optimising a process for the production of multicellular structures, the cell culture may be maintained for any number of days from the start of the maturation process (e.g. at least 1 day, at least 5 days, at least 10 days, at least 15 days, at least 20 days, or 25 days or more) to the completion of the maturation process. Images may be acquired at any time point during the maintenance of the cell culture. The images may be obtained after the 3D cell culture has been provided and during the incubation of the culture in conditions compatible with maturation of the cell population. Thus, time may be measured from the start of said incubation process, and/or from the completion of the step of providing the 3D cell culture (e.g. printing). The length of the maturation process may depend on the particular process and the aim of the method. For example, when the aim of the method is to produce multicellular structures, then the maturation process may be continued until its completion, and the methods described herein may be performed at any point such as e.g. at regular intervals throughout the maturation process. As another example, when the aim of the method is to optimise a process for the production of multicellular structures, the maturation process may not be continued until its completion, and the methods described herein may be performed at any point during the maturation process until sufficient information to assess the current maturation process is obtained.

One or more image of the cell culture may be acquired at regular intervals during at least some of the time during which the cell culture is maintained. For example, one or more images may be acquired every hour, every 2 hours, every 4 hours, every 6 hours, every 8 hours, every 12 hours, every 24 hours, every 36 hours, every 48 hours, about twice a day, about 3 times a day, or about 4 times a day.

A multicellular structure may be a structure comprising a plurality of cells with one or more functionalities or structural properties that are absent in the original cell population from which the multicellular structure was derived. A multicellular structure may be a structure comprising a plurality of cells at least some of which have different cell type, morphology, and/or function. A 3D cell culture may comprise a 3D scaffold and a cell population cultured at least partially embedded in 3D scaffold. The multicellular structure may be a tissue, organ, spheroid or organoid. The scaffold may be a matrix of optically transparent biomaterial. The scaffold may be a hydrogel scaffold. The 3D cell culture may have been obtained by forming a 3D structure from a composition comprising a cell population and a scaffold material. The method may further comprise providing a 3D cell culture in a vessel. Providing the 3D culture may comprise forming a 3D structure from a composition comprising a cell population and a scaffold material. The forming may be performed by 3D printing, moulding, or a combination thereof. Providing the 3D culture may comprising 3D printing a composition comprising a scaffold material. The composition may additionally comprises cells. Instead or in addition to this, cells may be seeded onto a 3D scaffold subsequent to formation of the 3D scaffold. A 3D scaffold, whether comprising cells or having cells seeded thereon, may be formed using any technology compatible with the printing of biomaterials, such as inkjet, microextrusion, laser-assisted printing or stereolithography.

The images may be / have been obtained using one or more technologies selected from: optical microscopy, fluorescence microscopy, spectral microscopy, holographic imaging, tomographic imaging, quantitative phase imaging, and magnetic resonance imaging. The optical microscopy may be phase contrast microscopy or brightfield microscopy. The spectral microscopy may be Raman microscopy. The holographic imaging may be quantitative phase imaging. The tomographic imaging may be holotomographic imaging or optical coherence tomography. The images may comprise label-free images. The images may comprise label-based images. The images may provide a signal indicative of the spatial configuration, health, or physiological properties of cells, groups of cells or multicellular structures, wherein the signal is associated with the cells themselves. The configuration may refer to the location and/or morphology of cells, groups of cells or multicellular structures. Multicellular structures may be referred to as macrostructures. Macrostructures may comprise multicellular structures that are at least 50 $\mu$m along at least one dimension. A signal may be considered to be associated with a cell when it is produced by interaction with a structure or compound that is part of the cell. For example, a cell may express a compound that is indicative of viability, cell type, etc. and that is associated with a detectable signal for example by including a label or by causing the release of a label.

The images may comprise label free images and/or label based images that provide a signal indicative of the presence of one or more markers or labels that are not associated with the cells themselves. The labels or markers may be indicative of the location within the 3D cell culture and/or the local chemical or physiological state within the 3D cell culture. The labels or markers may be selected from: nanoparticles and/or chemical compounds associated with the scaffold of the 3D cell culture and providing a signal indicative of the their local chemical or physiological state, indicator cells that are added to the cell population in the 3D cell culture or that are modified within the 3D cell culture and providing a signal indicative of their local physico-chemical or physiological state, and beads that are added to the 3D cell culture and provide a signal indicative of location within the 3D cell culture. A signal may be considered to not be associated with a cell when it is produced by interaction with a structure or compound that does not form part of the cells. For example, such structures or compounds may be provided as part of the scaffold material, by direct binding to the scaffold material or by providing nanoparticles or beads that are included in the composition from which the scaffold is made. As another example, such structures or compounds may be provided as part of indicator cells. Indicator cells may be genetically modified cells that are configured to produce a signal indicative of the local chemical or physiological state within the 3D cell culture. The indicator cells may be fluorescent or luminescent cells. The local chemical or physiological state may refer to the concentration of one or more compounds such as e.g. oxygen, $CO_2$, $H_2S$, $H_2O_2$, the pH, the nutrient concentration, the viability, etc. In general, any chemical property that can be measured using a nanoparticle or chemical sensor may be used. Physiological state may refer to stress such as starvation (in relation to a nutrient such as e.g. glucose, or another compound such as oxygen), viability, pH related stress, etc. Physiological state may refer to a differentiation state. The physiological state in a 3D cell culture may be measured using indicator cells, or using nanoparticles or compounds associated with the scaffold and that emit a signal upon interaction with cells, or upon interaction with live cells. Depending on the composition of the beads, the signal associated with said beads may be detectable using different imaging technologies such as optical imaging, fluorescence imaging, MRI, etc. Beads may advantageously be identifiable during histology of the mature sample. This may enable cross referencing of localised information within the sample during maturation and at the outcome of maturation.

Processing the one or more images to obtain a plurality of image-derived features may comprise using one or more computer vision algorithms to obtain a plurality of values quantifying respective expert-defined visual features in the one or more images. The expert-defined visual features may be selected from: features associated with localised cells, clusters of cells or macrostructures; features associated with the morphology of cells, clusters of cells or macrostructures; features associated with the spectral characteristics of a cell, cell cluster or macrostructure, where the spectral characteristics are indicative of a phenotype of the cells; and features associated with the local chemical or physiological state in the cell culture. Each image-derived feature may comprise one or more values quantifying an expert-defined visual feature in an image, or a summarised value derived therefrom. Features associated with localised cells, clusters of cells or macrostructures may be selected from: the number, distribution, density of cells, groups of cells or macrostructures; the number, distribution or density of cells, groups of cells or macrostructures having a particular phenotype; the ratio or proportion of cells having a particular phenotype, optionally wherein the method comprises using a computer vision algorithm to localise cells, clusters of cells, macrostructures or cells, clusters of cells or macrostructures having a particular phenotype. Features associated with the morphology of cells, clusters of cells or macrostructures may be selected from: metrics indicative of the texture of the cells, clusters of cells or macrostructures such as the mean, standard deviation, maximum, minimum, predetermined percentile, skewness, normalised weighted centroid, or kurtosis of pixel or voxel intensities for a cell, cluster of cells or macrostructure; metrics indicative of the geometry of cells, clusters of cells or macrostructures, optionally wherein the metrics indicative of the geometry are selected from size, shape, area, volume, circumference, sphericity, eccentricity, roundness, circularity, solidity, aspect ratio, number of morphological features such as branches in a network, and one or more dimensions of lumens in macrostructures. The features associated with the spectral characteristics of a cell, cell cluster or macrostructure may comprise a summarised spectral representation obtained by aggregation over the pixels or voxels of a cell, cluster of cells or macrostructure, wherein the spectral representation captures signals indicative of markers or chemical compounds visible in spectral imaging. A particular phenotype may refer for example to a morphological feature or presence of a marker indicative of e.g. cell type, such as e.g. a fluorescent marker. Cells, clusters of cells or macrostructures may be localised using label free or label based images. Labelled cells, clusters of cells and structures may be easier to localise using known segmentation algorithms.

The presence or absence of a particular phenotype may be determined by computing one or more metrics associated with the presence of a marker indicative of cell type and/or one or more metrics indicative of the texture, geometry and/or spectral characteristics of cells, groups of cells or macrostructures. For example, one or more such metrics may be compared with a respective predetermined threshold, and cells, cell clusters or macrostructures that are associated with one or more metrics that are above or below their respective thresholds (depending on the metric) may be considered to have the particular phenotype. When a plurality of such metrics are used, a multivariate analysis can be used to identify scores in a latent space for each cell, cell cluster or macrostructure and predetermined thresholds for latent space scores may be used. For example, a PCA analysis may be performed using a plurality of metrics indicative of the texture, geometry and/or spectral characteristics of cells, groups of cells or macrostructures, and one or more PCA scores (e.g. scores for the first principal component and/or the second principal component, etc.) may be compared to respective thresholds to identify cells, groups of cells or macrostructures that have a particular phenotype. The one or more thresholds that apply to one or more principal components may be defined by inspection of clusters of objects (where objects are cells, clusters of cells or macrostructures) in principal component coordinates. For example, thresholds may be defined as values that best separate two or more subpopulations of objects along one or more principal components.

The expert-defined visual features may comprise one or more values associated with the local chemical or physiological state in the cell culture, wherein the one or more values comprise the intensity of a signal from a marker indicative of one or more physico-chemical or physiological properties of the environment in the cell culture. The marker may be selected from nanoparticles and/or chemical compounds associated with the scaffold of the 3D cell culture, and indicator cells. The expert-defined visual features may comprise one or more values that are associated with locations defined at least in part by reference to the location of one or more visual markers of location. The visual markers of location may be beads that are added to the 3D cell culture. Thus, the method may comprise aligning a plurality of images or otherwise defining locations within images by reference to the coordinates of visual markers of location.

The method may comprise obtaining a summarised image for at least one of the one or more images, wherein obtaining a summarised image comprises pre-processing the image by projection to obtain a corresponding 2D equivalent image, subsampling the image, summarising information across a plurality of pixels in the image. Summarising information across a plurality of pixels may comprise obtaining a summary statistic such as a mean, distribution histogram, maximum, minimum, predetermined percentile, skewness, normalised weighted centroid, kurtosis, standard deviation of the signal for each of the plurality of pixels. The method may comprise obtaining an enriched image for at least one of the one or more images, wherein obtaining an enriched image comprises imputing the signal for at least a plurality of pixels not measured in the image. Imputing the signal may comprise interpolating the signal for said plurality of pixels. Imputing the signal may comprise obtaining a 3D image with an isotropic voxel representation. The method may comprise filtering images to remove uninformative images. Filtering images may comprise using a machine learning algorithm trained to identify uninformative images based on training images and/or based on a texture filter. Uninformative images may refer to images that are not likely to contain sufficient information to derive image-derived metrics, or where image-derived metrics if they can be derived are not informative of the progress or outcome of the maturation process. This may be e.g. because the sample is no longer transparent enough such that 3D information can no longer be obtained. The machine learning algorithm may be a classifier. Any classifier can be used, from a simple regression based classifier to a classifier that uses embeddings from a neural network trained to identify image features (e.g. deep neural networks such as autoencoders, convolutional neural networks, etc.).

The one or more metrics indicative of the progress or outcome of the maturation process may be scores indicative of the current or future maturation status of the 3D cell culture, wherein the status of the 3D cell culture refers to the quality of the mature structure for a particular purpose, the relationship to a normal or ideal maturation process, or the maturation progress along previously established maturation timeline. The metrics of interest may be selected from: the number of cells in the multicellular structure, the number, percentage or proportion of cells in the multicellular structure that have a particular phenotype, the number or characteristics of macrostructures in the multicellular structure, one or more physical properties of the 3D cell culture such as porosity, characteristics of extracellular components of the multicellular structure, metrics that are indicative of one or more properties of the multicellular structure and that are not directly measurable using non-destructive, non-invasive measurement technologies, latent variables of a statistical model that models the maturation time as a function of a multivariate profile, where the multivariate profile comprises one or more of the image-derived features obtained for a plurality of maturation processes that have been deemed to progress normally, or metrics derived therefrom. The metrics of interest may comprise a plurality of values for one or more of the metrics, each of the value associated with a different location of the 3D cell culture. The use of localized metrics may be particularly advantageous in combination with markers of location such as beads, as metrics indicative of the outcome or progress of the maturation process can then be quantified in training data by reference to a common system of coordinates across images and/or across samples. As such, the metrics may also be predicted by reference to a common system of coordinates. This may for example use image-derived features that are also quantified by reference to the common system of coordinates. For example, the cell density and viability at a certain location during maturation may be predictive of the cell type distribution and porosity in the corresponding location measured at the outcome of the maturation process e.g. during histology.

The statistical model may comprises a latent variable model that models the maturation time as a function of a set of variables comprising the image-derived features. The statistical may comprise a machine learning model. The statistical model may have been adapted to predict the value of one or more metrics indicative of the progress or outcome of the maturation process by fitting or training the model to perform such predictions using training data, the training data comprising images of a plurality of 3D cell cultures comprising a cell population undergoing a maturation process, the images being images acquired by imaging the 3D cell cultures at different depths and/or from different angles, or the values of one or more image-derived features obtained by processing said images. The images may relate to cell cultures that are deemed to operate normally. The training data may comprise corresponding values of one or more metrics indicative of the progress or outcome of the maturation process, wherein the values are measured values or values derived from measured values obtained through invasive or destructive measurement processes. Thus the statistical model may be a machine learning model trained to predict one or more properties of the matured sample, using training data comprising properties obtained by destructive analytical methods, such as for example measurement processes that quantify cell growth, composition of the sample in terms of cell type/marker expression, % of cells of a particular type or expressing a particular marker, porosity, cell viability, for example using sample fixing and staining, or cell sorting. The machine learning model may be a linear regression model or a non-linear regression model. The machine learning model may be selected from a simple linear regression model, a multiple linear regression model, a partial least square regression model, an orthogonal partial least square regression, a random forest regression model, a decision tree regression model, a support vector regression model, and a k-nearest neighbour regression model. The latent variable model may be a multivariate linear model such as PCR, PLS, or OPLS.

The statistical model may not use as input any feature obtained using an invasive or destructive measurement process, and/or any process parameter. The statistical model may uses as input one or more measurements that are acquired without using an invasive or destructive measurement technique. The statistical model may only use image-derived features or features derived therefrom. The statistical model may use as input the value of one or more latent variables from a model that models the maturation time as a function of a set of variables comprising the image-derived features. The statistical model may comprise a multivariate model that directly uses as input image-derived features. The method may not comprise the use of a mechanistic model that models cell growth, interaction or physico-chemical processes in the cell culture. The statistical model may make prediction in a completely data-driven manner. The statistical model may comprise a model that models the maturation time as a function of a set of variables comprising the image-derived features, and a model adapted to predict the value of one or more metrics indicative of the outcome of the maturation process based on inputs comprising one or more latent variables of the model that models the maturation time as a function of a set of variables comprising the image-derived features.

The model that models the maturation time as a function of a set of variables comprising the image-derived features may be a batch level model, such as a batch evolution model. For example, batch-level models as implemented in Simca-Online from Sartorius Stedim Data Analytics may be used.

In other words, the statistical model comprise a model that predicts end point metrics (metrics indicative of the outcome of the maturation process) from a fitted batch-level model (a model that models the maturation time as a function of a set of variables comprising the image-derived features). The fitted model that models the maturation time as a function pf a set of variables comprising the image derived features may use the whole time trajectory from start to end of observation of a cell culture in training data. The model may take as input a set of variables comprising the image-derived features quantified for one or more time points, and a set of variables imputed for one or more further time points. Imputation may be performed by regression. This may be particularly advantageous when a complete time trajectory corresponding to the fitted batch-level model is not available, such as e.g. when predicting end point metrics at a time point earlier than the end of the time trajectory with which the model was fitted, where imputation may be used to impute the missing time points in the time trajectory. Thus, it is possible to use imputation by regression during the experiment to predict what the future trajectory of image-derived features is likely to look like based on the measurements collected up to the current point. Fitting of batch level models for any multivariate data set and/or imputation by regression (where in this case the variables include one or more image-derived metrics) can be performed using Simca-Online from Sartorius Data Analytics. The model adapted to predict the value of one or more metrics indicative of the outcome of the maturation process may be a machine learning model such as a linear model or an artificial neural network.

According to a second aspect, there is provided a method for providing a tool for monitoring a process for producing a multicellular structure from a cell population in a 3D cell culture, the method comprising: (i) obtaining a training data set comprising: images of a plurality of 3D cell cultures comprising a cell population undergoing a maturation process, wherein the images are images acquired by imaging the 3D cell culture at different depths and/or from different angles, or the values of one or more image-derived features obtained by processing said images; (ii) obtaining an image analysis algorithm adapted to process images to obtain the one or more image-derived features, and (iii) providing a statistical model that predicts the values of the one or more metrics indicative of the progress or outcome of the maturation process in the training data using inputs comprising the one or more image-derived features from the training data. The method according to the present aspect may have any of the features disclosed in relation to the first aspect. The method of the present aspect may further have any one or any combination of the following optional features.

The training data set may further comprise corresponding values of one or more metrics indicative of the progress or outcome of the maturation process, wherein the values are measured values or values or values derived from measured values obtained through invasive or destructive measurement processes. The images may relate to a plurality of 3D cell cultures comprising a cell population undergoing a maturation process that is considered to have progressed normally.

According to a third aspect, there is provided a method for monitoring a process for producing multicellular structures from a cell population in a 3D cell culture, the method including the steps of: obtaining one or more images of the 3D cell culture, wherein the images comprise label free images and/or label based images that provide a signal indicative of the presence of one or more markers or labels that are not associated with the cells themselves, and wherein the images are images acquired by imaging the cell culture at different depths and/or from different angles, processing the one or more images to obtain a plurality of image-derived features, and determining the value of one or more metrics indicative of the progress or outcome of the maturation process using a statistical model adapted to predict the values of the one or more metrics indicative of the progress or outcome of the maturation process using inputs comprising the plurality of image-derived features.

The method may have any one or more of the features described in relation to embodiments of the first aspect.

The method may have any one or more of the following features. A 3D cell culture may comprise a 3D scaffold and a cell population cultured at least partially embedded in 3D scaffold, wherein the 3D cell culture further comprises one or more markers or labels that are not associated with the cells themselves and that are indicative of the location within the 3D cell culture and/or the local chemical or physiological state within the 3D cell culture. The images may be images obtained using one or more technologies selected from: optical microscopy, fluorescence microscopy, spectral microscopy, holographic imaging, tomographic imaging, quantitative phase imaging, and magnetic resonance imaging. The optical microscopy may be phase contrast microscopy or brightfield microscopy. The spectral microscopy may be Raman microscopy. The holographic imaging may be quantitative phase imaging. The tomographic imaging may be holotomographic imaging or optical coherence tomography. The images may optionally comprise label-free images and/or label-based images that provide a signal indicative of the spatial configuration, health, or physiological properties of cells, groups of cells or multicellular structures, wherein the signal is associated with the cells themselves. The configuration may refer to the location and/or morphology of cells, groups of cells or multicellular structures. Multicellular structures may be referred to as macrostructures. Macrostructures may comprise multicellular structures that are at least 50 µm along at least one dimension. A signal may be considered to be associated with a cell when it is produced by interaction with a structure or compound that is part of the cell. For example, a cell may express a compound that is indicative of viability, cell type, etc. and that is associated with a detectable signal for example by including a label or by causing the release of a label. Processing the one or more images to obtain a plurality of image-derived features may comprise using one or more computer vision algorithms to obtain a plurality of values quantifying respective expert-defined visual features in the one or more images. The expert-defined visual features may be features associated with the local chemical or physiological state in the cell culture. The expert-defined visual features may further comprise one or more features selected from: features associated with localised cells, clusters of cells or macrostructures, features associated with the morphology of cells, clusters of cells or macrostructures, features associated with the spectral characteristics of a cell, cell cluster or macrostructure, where the spectral characteristics are indicative of a phenotype of the cells. Each image-derived feature may comprise one or more values quantifying an expert-defined visual feature in an image, or a summarised value derived therefrom.

Also described according to a further aspect is a method for providing a tool for monitoring a process for producing a multicellular structure from a cell population in a 3D cell culture, the method comprising: (i) obtaining a training data set comprising: images of a plurality of 3D cell cultures comprising a cell population undergoing a maturation process, or the values of one or more image-derived features obtained by processing said images, wherein the images comprise label free images and/or label based images that provide a signal indicative of the presence of one or more markers or labels that are not associated with the cells themselves and wherein the images are images acquired by imaging the cell culture at different depths and/or from different angles; optionally wherein the training data set further comprises corresponding values of one or more metrics indicative of the progress or outcome of the maturation process, wherein the values are measured values or values or values derived from measured values obtained through invasive or destructive measurement processes, and/or wherein the images relate to a plurality of 3D cell cultures comprising a cell population undergoing a maturation process that is considered to have progressed normally; (ii) obtaining an image analysis algorithm adapted to process images to obtain the one or more image-derived features, and (iii) providing a statistical model that predicts the values of the one or more metrics indicative of the progress or outcome of the maturation process in the training data using inputs comprising the one or more image-derived features from the training data. The inputs of the statistical model may not include any feature obtained using an invasive or destructive measurement process. The method may further comprise one or more of: providing the statistical model to a user, data storage device or computing device, providing the image analysis algorithm to a user, data storage device or computing device. Obtaining a training data set may comprise identifying one or more metrics that characterise the progress and/or outcome of the particular maturation process, identifying one or more image-derived features that are predictive of one or more metrics indicative of the progress and/or outcome of the maturation process, identifying one or more further measurements that are predictive of one or more metrics indicative of the progress or outcome of the maturation process, acquiring the one or more images of the 3D cell culture using a label-free or label-based imaging technique, measuring the corresponding values of one or more metrics indicative of the progress or outcome of the maturation process or values from which such metrics can be derived, and/or culturing the plurality of cell populations. The 3D cell culture according to the present aspect comprises one or more labels or markers that are not associated with the cells themselves and that are indicative of location within the 3D cell culture and/or of the local chemical or physiological state within the 3D cell culture. The method may include any of the features described in relation to the first aspect.

According to a fifth aspect, there is provided a method of producing one or more multicellular structures, the method comprising: providing a 3 dimensional cell culture comprising a cell population in or on a 3 dimensional scaffold, culturing the cell culture in conditions suitable for the cell population to undergo a maturation process; and monitoring the cell population during the maturation process using the method of any embodiment of the first or third aspects. The method may further comprise implementing one or more control actions based on the predicted metrics indicative of the progress or outcome of the maturation process. A control action may be selected from: addition of a compound or composition to the cell culture, change of the liquid medium in the cell culture, change of the physico-chemical conditions of the culturing process (e.g. temperature, dissolved oxygen, pH), modification of a scheduled time and/or concentration of addition of a compound or composition to the cell culture, selection of a time for termination of the maturation process. The predicted metrics indicative of the progress of the maturation process may be used to determine one or more control actions to be taken. Examples of control actions include the addition of a compound or composition such as a nutrient, growth factor, cytokine, inhibitor etc, a change of culture medium, and any other action that may be taken to modify the environment of the cell population and that may impact the maturation process. In embodiments, the identity and order of addition of one or more compounds or compositions that may impact the maturation process may be predetermined, and the timing and/or concentration of additions of one or more of said compounds or compositions may be determined dynamically depending on one or more predicted metrics indicative of the progress of the maturation process. This may be particularly useful in cases where maturation processes can be effected in cell culture using a known sequence of control actions, but where the precise parameters of the control actions that are optimal for a cell population and desired maturation process outcome may vary depending on e.g. the genetic background of the cell population, the exact printing conditions, the fitness of the cell population, etc.

Thus, also described herein is a method of controlling a process for producing a multicellular structure from a cell population in a 3D cell culture, the method comprising: monitoring the process using the method of any embodiment of the first or third aspects; and determining one or more control actions based on the predicted metrics indicative of a progress of the maturation process. The control action may be selected from: addition of a compound or composition to the cell culture, change of the liquid medium in the cell culture, modifying a scheduled time and/or concentration of addition of a compound or composition to the cell culture, change of one or more physico-chemical conditions of the cell culture. The method may further comprise culturing the cell population in conditions suitable for the cells to undergo the maturation process. The method may further comprise implementing the determined one or more control actions.

The methods described herein find use in the context of producing multicellular structures for therapy (including tissue-based therapy), for tissue engineering, for drug screening, for disease modelling, for production of cellular products by multicellular structures, and for safety pharmacology, amongst other applications. The methods described herein may be used for constant/repeated monitoring of a process for producing multicellular structures, for responsive control of a process for producing multicellular structures, for optimisation of a process for producing multicellular structures, and as an accurate basis for a decision with respect to quality control or a control step. Further, any such control step and its outcome can be recorded and used together with the predictions from the method as a basis for continuous improvement of a process for producing multicellular structures.

According to a seventh aspect, there is provided a system for monitoring a process for producing multicellular structures from cell populations in 3D cell cultures, the system including: at least one processor; and at least one non-transitory computer readable medium containing instructions that, when executed by the at least one processor, cause the at least one processor to perform operations comprising: obtaining one or more images of the 3D cell culture that are acquired by imaging the cell culture at different depths and/or from different angles, processing the one or more images to obtain a plurality of image-derived features, and determining the value of one or more metrics indicative of the progress or outcome of the maturation process using a statistical model adapted to predict the values of the one or more metrics indicative of the progress or outcome of the maturation process using inputs comprising the plurality of image-derived features. The system according to the present aspect may be configured to implement the method of any embodiment of the first aspect and/or any other preceding aspect. In particular, the at least one non-transitory computer readable medium may contain instructions that, when executed by the at least one processor, cause the at least one processor to perform operations comprising any of the operations described in relation to the preceding aspects. Instead or in addition to this, the system instructions may, when executed by the at least one processor, cause the at least one processor to perform operations comprising: obtaining one or more images of the 3D cell culture, wherein the images comprise label free images and/or label based images that provide a signal indicative of the presence of one or more markers or labels that are not associated with the cells themselves, and wherein the images are images acquired by imaging the cell culture at different depths and/or from different angles, processing the one or more images to obtain a plurality of image-derived features, and determining the value of one or more metrics indicative of the progress or outcome of the maturation process using a statistical model adapted to predict the values of the one or more metrics indicative of the progress or outcome of the maturation process using inputs comprising the plurality of image-derived features. In particular, the at least one non-transitory computer readable medium may contain instructions that, when executed by the at least one processor, cause the at least one processor to perform operations comprising any of the operations described in relation to the third aspect.

According to an eighth aspect there is providing a system for providing a tool for monitoring a process for producing multicellular structures from cell populations in 3D cell cultures, the system including: at least one processor; and at least one non-transitory computer readable medium containing instructions that, when executed by the at least one processor, cause the at least one processor to perform operations comprising: (i) obtaining a training data set comprising: images of a plurality of 3D cell cultures comprising a cell population undergoing a maturation process, wherein the images are images acquired by imaging the 3D cell culture at different depths and/or from different angles, or the values of one or more image-derived features obtained by processing said images; (ii) obtaining an image analysis algorithm adapted to process images to obtain the one or more image-derived features, and (iii) providing a statistical model that predicts the values of the one or more metrics indicative of the progress or outcome of the maturation process in the training data using inputs comprising the one or more image-derived features from the training data. The system according to the present aspect may be configured to implement the method of any embodiment of the second aspect. In particular, the at least one non-transitory computer readable medium may contain instructions that, when executed by the at least one processor, cause the at least one processor to perform operations comprising any of the operations described in relation to the second aspect. Instead or in addition to this, the system instructions may, when executed by the at least one processor, cause the at least one processor to perform operations comprising: : (i) obtaining a training data set comprising: images of a plurality of 3D cell cultures comprising a cell population undergoing a maturation process, or the values of one or more image-derived features obtained by processing said images, wherein the images comprise label free images and/or label based images that provide a signal indicative of the presence of one or more markers or labels that are not associated with the cells themselves and wherein the images are images acquired by imaging the cell culture at different depths and/or from different angles; optionally wherein the training data set further comprises corresponding values of one or more metrics indicative of the progress or outcome of the maturation process, wherein the values are measured values or values or values derived from measured values obtained through invasive or destructive measurement processes, and/or wherein the images relate to a plurality of 3D cell cultures comprising a cell population undergoing a maturation process that is considered to have progressed normally; (ii) obtaining an image analysis algorithm adapted to process images to obtain the one or more image-derived features, and (iii) providing a statistical model that predicts the values of the one or more metrics indicative of the progress or outcome of the maturation process in the training data using inputs comprising the one or more image-derived features from the training data.The inputs of the statistical model may not include any feature obtained using an invasive or destructive measurement process. In particular, the at least one non-transitory computer readable medium may contain instructions that, when executed by the at least one processor, cause the at least one processor to perform operations comprising any of the operations described in relation to the fourth aspect.

According to a ninth aspect, there is provided a system for producing a multicellular structure from a cell population in a 3D cell culture and/or for controlling a process for producing a multicellular structure from a cell population in a 3D cell culture, the system including: at least one processor; and at least one non-transitory computer readable medium containing instructions that, when executed by the at least one processor, cause the at least one processor to perform operations comprising: monitoring the process for producing multicellular structures using the method of any embodiment of the first or third aspects and optionally determining and/or triggering one or more actions necessary for culturing a cell population in conditions suitable for the cells to undergo the maturation process and/or determining one or more control actions based on the predicted metrics indicative of progress of the maturation process. The system according to the present aspect may be configured to implement the method of any embodiment of the fifth or sixth aspect.

The system according to any aspect described herein (such as e.g. any of the seventh to ninth aspects) may comprise one or more of: a cell culture environment (such as e.g. an incubator or bioreactor), one or more sensors (such as e.g. one or more imaging devices), and one or more effectors (such as e.g. one or more liquid handling or gas handling systems).

According to a further aspect, there is provided a non-transitory computer readable medium comprising instructions that, when executed by at least one processor, cause the at least one processor to perform the method of any embodiment of any aspect described herein.

According to a further aspect, there is provided a computer program comprising code which, when the code is executed on a computer, causes the computer to perform the method of any embodiment of any aspect described herein.

Brief Description of the Drawings

Embodiments of the present disclosure will now be described by way of example with reference to the accompanying drawings in which:

Figure 1 is a flowchart illustrating a method for monitoring a process for producing multicellular structures according to a general embodiment of the disclosure;

Figure 2 is a flowchart illustrating a method for providing a tool for monitoring a process for producing multicellular structures according to an embodiment of the disclosure;

Figure 3 illustrates schematically an exemplary system according to the disclosure;

**Figure 4** is a flowchart illustrating a method of monitoring a biofabrication process, according to an embodiment of the disclosure.

**Figure 5** (i.e., 5A and 5B) shows images of labelled osteoblasts of an example biomanufactured sample. **A.** Single focal plane 1X (left) and 3X (right) widefield fluorescence images of labelled osteoblast of an example biomanufactured sample showing successful cultivation. **B.** Single focal plane 1X (left) and 3X (right) widefield fluorescence images of labelled osteoblasts of an example biomanufactured sample showing unsuccessful cultivation.

Where the figures laid out herein illustrate embodiments of the present invention, these should not be construed as limiting to the scope of the invention. Where appropriate, like reference numerals will be used in different figures to relate to the same structural features of the illustrated embodiments.

<u>Detailed Description</u>

Specific embodiments of the invention will be described below with reference to the figures.

The disclosure relates in part to the monitoring of cell populations undergoing a maturation process in a 3D cell culture, using non-destructive non-invasive measurement processes.

A cell culture refers to a bioprocess whereby live cells are maintained in an artificial environment such as a cell culture vessel. The cell culture vessel may be any vessel suitable to host a 3D cell culture in a liquid cell culture medium. A cell culture vessel may be a cell culture dish such as a plate, a flask, a bioreactor, or any other type of container that is compatible with the acquisition of images of a cell culture while the cell culture is underway, without sampling of the cell culture. The cell culture vessel may be maintained in a housing, which may be an incubator or any other kind of housing suitable for live cell culture in a culture vessel. For example, any culture vessel and/or housing that can be used to maintain a physicochemical environment compatible with cell viability may be used in the context of the present disclosure. The particular materials and/or configuration of the container that is usable within the context of the methods described herein is not limited in principle and may depend on the particular imaging modalities and apparatus used. For example, when MRI imaging is used it is preferrable for the container to be non-magnetic. As another example, when an optical imaging system is used the container may have a transparent window or access for the imaging sensor. The vessel may be a single use vessel, or a reusable vessel. The vessel may be made primarily of stainless steel, plastic or any other material known in the art for use in industrial or experimental bioprocesses. The methods and systems described herein are applicable to bioprocesses that use any types of cells that can be maintained in culture, whether eukaryotic or prokaryotic, and that are capable of producing or forming part of multicellular structures. In embodiments, the cells are eukaryotic cells, preferably animal cells. In embodiments, the cells are mammalian cells. In embodiments, the cells are pluripotent cells, such as embryonic stem cells, adult stem cells, or induced pluripotent stem cells. The present disclosure relates in particular to 3D cell cultures. A 3D cell culture is a bioprocess whereby a live cell population is maintained in or on a 3 dimensional scaffold. Thus, the cells in a 3D cell culture are not maintained in suspension in a bulk culture medium, and do not grow as a monolayer on a 2 dimensional surface. Monolayers of cells may be present in a 3D cell culture, such as e.g. epithelia. These may grow on the surface of a 3D tissue or scaffold. A 3D cell culture process typically starts from a cellularised structure, which is a 3 dimensional culture comprising individual cells or groups of cells. The methods and systems described herein are applicable to bioprocesses of any scale and comprising the production of multicellular structures for any purpose including in particular, for research and development, for process optimisation, for industrial production, etc.

A 3D cell culture thus comprises a 3D scaffold and a cell population. The scaffold may be made of any material compatible with cell viability, also referred to as "biomaterial". The scaffold may be made of any material that is compatible with the imaging technology used to acquire the images from which image-derived features are obtained according to the methods described herein. The scaffold may be made of an optically transparent material. This may be advantageous when the 3D cell culture is monitored using optical microscopy technologies. Alternatively, the scaffold may not be transparent, for example when the imaging technology used can collect information at least through soe of the depth of a non-transparent sample. In embodiments, the scaffold is a hydrogel scaffold, also referred to as "hydrogel matrix". A cell population may be maintained at least partially embedded in a 3 dimensional scaffold such as a hydrogel matrix forming a three-dimensional structure (referred to herein as "cellularised object"). The cell population may be at least partially embedded in the scaffold in that at least a portion of the cell population grows within the scaffold or on internal surfaces of the scaffold as opposed to on the external surface thereof. Part of the cell population may also grow on the external surface of the 3D scaffold. The 3D cell culture may be provided on a support inside the culture vessel. The volume of the vessel may be determined based on the requirement of the bioprocess, such as e.g. the size of the cellularised object(s) and/or the configuration of the supports (in embodiments comprising one or more cellularised objects cultured on a support in a vessel), for example to ensure that the cellularised object(s) is/are fully immersed in culture medium and/or to obtain a ratio of volume of culture medium to volume of cellularised object within a desired range. The 3D cell culture may be obtained by providing a scaffold in which cells are embedded, for example by forming a 3D structure from a composition comprising cells and a scaffold material also referred to as a matrix or matrix material (where such a composition can also be referred to as a "bioink"), or by providing a scaffold onto which cells are seeded. The scaffold and/or bioink may be formed using any technology known In the art, such as e.g. molding, casting or 3D printing. A 3D hydrogel structure may be obtained through a two-step process that involves forming a composition comprising biomaterials capable of forming a hydrogel into a 3D shape and consolidating the object so that it maintains its shape in culture. The term "3D printing" (also referred to as "additive manufacturing") refers to the creation of a 3D structure by computer controlled deposition of a material. The material may be any biomaterial, including a bioink.

3D printing involves the controlled deposition of material into a three-dimensional shape. 3D printing typically follows a computer-aided design (CAD) model. CAD models can be stored as STL (stereolithography file format) files or AMF (Additive Manufacturing File format) files. 3D printing may for example be achieved by extrusion (for example, using a syringe with a piston or screw) or by ink-jet (by projection of ink droplets). Within the context of the present disclosure, 3D printing is typically achieved by extrusion, particularly pneumatic extrusion. However, 3D printing by inkjet is also possible and explicitly envisaged. For example, a bioink may be loaded into an extrusion syringe that is mounted on a bio-printer. The syringe may be equipped with a pusher to control the flow of bioink. The bioink may be in a flowable consistency during printing, and may be rapidly solidified when deposited by the 3D printer. This ensures that the printed structure maintains its 3D shape. A similar process may be used during molding, where the bioink may be prepared in a flowable consistency and poured or otherwise transferred to a mold, where is it rapidly solidified. Once solidified, the bioink may be further consolidated by polymerisation, as will be explained further below. In the context of 3D printing, the scaffold or cellularised object is typically formed by progressive addition of material in the form of beads of material or a filament of material. When using 3D printing to form the scaffold or cellularised object, the scaffold or cellularised object may have an internal three-dimensional structure. In other words, the scaffold or cellularised object may not be a solid (continuous) form such as a solid cube. This may also be referred to as the scaffold or cellularised object comprising cavities or pores. Thus, the scaffold or cellularised object may be referred to as having a certain porosity. The porosity of a 3D cell culture may refer to the ratio of the volume of the pores to the total external volume of the deposited object. This may be affected by the presence of the cells, such that the porosity of the structure may change during the maturation process. The total volume of the scaffold or cellularised object refers to the external volume of the scaffold or cellularised object. Advantageously, when using 3D printing the total volume of the deposited object may be varied, as well as the external shape of the object and its internal structure, to suit a particular application (such as e.g. a particular scale of production, a particular cell type, a particular bioreactor, etc.). This advantageously may not require changing the material used and/or the hardware used for printing. A variety of shapes and dimensions for the scaffold or cellularised object are envisaged. In embodiments, the scaffold or cellularised object has dimensions such that the total volume of the deposited object is in the order of mm$^3$, cm$^3$ (e.g. 0.1 to 10 cm$^3$) or dm$^3$ (e.g. 1 to 10 dm$^3$). For example, the three-dimensional structure may have been obtained by depositing between 0.1 ml and 1l of bioink, between 0.1 ml and 500 ml of bioink or between 0.1 ml and 250 ml of bioink. The scaffold or cellularised object may have any shape. For example, the scaffold or cellularised object may have a three-dimensional lattice structure, such as a regular three-dimensional cubic lattice structure. The regular cube lattice structure may comprise cubic pores separated by walls, or parallel channels of square section extending through one dimension of the object. This advantageously results in a simple structure that is relatively easy to print, enables a homogeneous flow of liquid through the structure and comprises pores of homogeneous sizes, thereby increasing the likelihood that the cell culture within the structure will be homogeneous. In embodiments, the scaffold has a plurality of porous external walls (also referred to as "sides" or "faces") and a plurality of solid external walls. This may enable a controlled flow of liquid (such as e.g. culture medium) through the cell culture, as a flow can only enter and exit the cell culture through the porous external walls. For example, the scaffold may have two substantially parallel porous external walls, enabling a parallel flow through each of the two porous external walls. The other walls may be solid in order to guide the flow through a first porous external wall, through the object and through a second porous external wall.

The term "hydrogel" refers to a crosslinked hydrophilic polymer that does not dissolve in water. A hydrogel may be obtained by consolidation (also referred to as "polymerisation" or "cross linking") of a bioink. A bioink is a composition comprising one or more biomaterials that can form a hydrogel in appropriate polymerisation condition, and one or more. Suitably, a bioink as described in US 2019/002836A1 may be used, the entire content of which is incorporated herein by reference. A biomaterial is a biocompatible material, i.e. a material that is compatible with the maintenance of living cells. In embodiments, the one or more biomaterials that can form a hydrogel comprise alginic acid or a sodium salt thereof also referred to as "sodium alginate" or "alginate" (a naturally occurring polysaccharide which can form a polymer called "alginate" in the presence of e.g. Calcium ions, a process also called "gelation"), fibrinogen (a naturally occurring glycoprotein complex which can form a polymer called "fibrin" by enzymatic conversion by thrombin, a process also referred to as "coagulation"), and/or gelatin (a peptide composition that can form a hydrogel when hydrated and maintained at temperatures below gelling point). In embodiments, the one or more biomaterials that can form a hydrogel comprise chitosan. For example, the one or more biomaterials that can form a hydrogel may comprise chitosan, alginate and fibrinogen. As another example, chitosan may be the only biomaterial capable of forming a hydrogel that is used in the bioink. At least one of the biomaterials is such that the polymerised object is stable in the desired cell culture conditions. For example, when the cell culture conditions comprise a temperature T, at least one of the biomaterials is such that it remained polymerised at temperature T. As another example, when the cell culture conditions comprise a concentration of one or more components (such as e.g. ions) within a certain range, at least one of the biomaterials is such that it remains polymerised in media having said composition. As another example, when the cell culture conditions require a pH within a certain range, at least one of the biomaterials is such that it remains polymerised in media having a pH within said range. It is advantageous for at least one of the biomaterials used to be such that polymerisation is not reversible, in order to ensure the stability of the hydrogel in culture conditions. For example, the coagulation of fibrinogen is irreversible, whereas the gelling of alginic acid can be at least partially reversed through removal of calcium ions, and the gel formed by gelatin can be melted by reheating. Other biocompatible materials that can form a hydrogel may be used. The one or more biomaterials may comprise one or more biomaterials that can form a hydrogel, and one or more additional components or additives. The one or more additional components may provide one or more desired properties to the bioink and/or the hydrogel. In embodiments, at least one of the biomaterials and/or one of the one or more additional components ensures that the bioink has desired rheological properties (such as e.g. a desired consistency and/or viscosity) prior to and during deposition. For example, the composition may comprise one or more components that ensure that the bioink can maintain its shape at least temporarily, e.g. during printing, prior to the irreversible consolidation of the biomaterials into a hydrogel. The rheological properties of the bioink and the associated conditions for printing that enable the bioink to maintain its shape at least temporarily while being compatible with cell viability may be assessed for example as described in the examples. The one or more additional components may also be biomaterials. For example, the bioink may comprise a gelling agent, such as e.g. gelatin. A gelling agent such as e.g. gelatin may be used to maintain the shape of the bioink for example during deposition, by cooling the deposited bioink. The bioink may then be treated with a polymerisation solution, also referred to as "consolidation solution" (or a plurality of solutions) in order to cause the other biomaterials to form a hydrogel. When the bioink comprises alginic acid, the polymerisation solution(s) may comprise calcium ions. When the bioink comprises fibrinogen, the polymerisation solution(s) may comprise thrombin. It is advantageous for the gelling agent to have a gel point (also referred to as "transition point" or "gel melting temperature") that is compatible with cell viability, i.e. that is such that there exists a range of temperatures compatible with cell viability that is below the gel point of the gelling agent, and a range of temperatures compatible with cell viability that is above the gel point of the gelling agent. For example, the gelling agent may have a melting temperature below 35°C. For example, a gelatin with a gel point between 27 and 32 °C (such as e.g. between 28 and 30°C) may be used. Thus, the bioink may be deposited while composition is a temperature that is above the gelling point of the composition (such as e.g. between 28 and 37°C) or slightly below the gelling point of the composition (such as e.g. between 21 and 28°C), such that the bioink is fluid, and rapidly cooled at / after deposition to a temperature that is below the gelling point of the composition after deposition (such as e.g. between 0 and 20°C) such that the bioink gels. This may be achieved for example by depositing the bioink onto a cooled substrate. The temperature of the cooled substrate and/or the environment in which the bioink is deposited may be adjusted depending on the temperature of the bioink and the rate of deposition, in order to ensure that the deposited object maintains its shape. In embodiments, the bioink may be deposited while the composition is a temperature between 21 and 28°C. In embodiments, the consolidation of the other biomaterials is performed at a temperate above the gelling point of the gelling agent. This may re-dissolve at least part of the gelling agent which can then be removed, when the other biomaterials have been polymerised. This may further be advantageous in optimising the activity of any enzyme that is active during consolidation. For example, a temperature of approximately 37°C is advantageous for consolidation with thrombin. The bioink may comprise a first solution comprising between 5% and 40% w/v (weight by volume) of gelatin (such as e.g. approximately 20% w/v of gelatin), a second solution comprising between 1% and 12% w/v of alginate (such as e.g. approximately 4% w/v of alginate), and a third solution comprising between 1% and 15% w/v of fibrinogen (such as e.g. approximately 8% by mass fibrinogen). The first solution may represent 35 to 65% by volume of the bioink (such as e.g. approximately 50% by volume). The second solution may represent 15 to 35% (such as e.g. approximately 25%) by volume of the bioink. The third solution may represent 15 to 35% (such as e.g. approximately 25%) by volume of the bioink. Thus, the bioink may comprise between 1.75% and 26% w/v of gelatin, between 0.15% and 4.2% w/v of alginate (e.g. sodium alginate), and between 0.15% and 5.25% w/v of fibrinogen. For example, the bioink may comprise approximately 5% w/v gelatin, 2% w/v alginate and 2% w/v fibrinogen. The bioink and each of the solutions may comprise the (respective) biomaterials in a solution comprising nutrients and one or more components ensuring an osmotic pressure compatible with cell viability, such as e.g. a culture medium. A culture medium (also referred to as "growth medium") solution is a solution designed to support the growth of a population of cells. For consolidation, the deposited bioink may be incubated in the polymerisation solution for a predetermined period of time (such as e.g. 1 hour), for example by immersion of the deposited object in the polymerisation solution. A 3D cell culture may be maintained within a liquid culture medium, wherein the cellularised object is fully immersed within the medium. The culture medium (also referred to simply as "medium") can be any medium that is suitable for the culture of cells.

The cell population is typically a eukaryotic population, though it may also be a prokaryotic cell population. The cells may be primary cells, cell lines or production cells (such as cells from a cell line that is a production cell line). A cell line is a population of immortal cells maintained in artificial (culture) conditions. Production cells are cells from cell populations developed for the production of biomaterials and that typically have higher growth rates and/or protein expression rates and/or metabolic rates than primary cells of the same origin. Production cells are typically from production cell lines. Production cells may be derived from primary cells, such as e.g. mesenchymal stem cells derived from bone marrow. Such cells may have good capacity for in vitro expansion and may be used for the production of cells of particular cell types and/or for production of proteins of interest. The cells may be animal cells, such as mammalian or insect cells.

As used herein, a maturation process is a process whereby a population of cells comprising individual cells or groups of cells undergo proliferation, 3D organisation and/or specialisation to produce a multicellular structure. Specialisation refers to the process of acquiring a new physiological function. This can be a physiological function acquired by single cells (e.g. secretion, new cell identity e.g. differentiation) or by a group of cells (e.g. barrier function). A multicellular structure is a structure comprising a plurality of cells with one or more functionalities or structural properties that are absent in the original cell population from which the multicellular structure was derived. Thus, the multicellular structure may be referred to as a "complex multicellular structure" in that it comprises a plurality of cells with 3D organisation (presence of macro and/or microstructures) and/or one or more emergent physiological functions. Such multicellular structures may in some cases comprise multiple subpopulations of cells with different physiological functions. Examples of multicellular structures include tissues, organs, spheroids and organoids. In embodiments, the multicellular structure is a tissue, organ or organoids. These are more complex structures than spheroids, although spheroids do typically comprise a plurality of cells that differ at least by their metabolic and/or proliferation status and a pattern of localisation of these subpopulations can typically be discerned. The multicellular structure may be a vascularised structure or tissue. 3D printing of vascularised tissues is reviewed in Chen et al. (Front. Bioeng. Biotechnol., 13 May 2021, doi.org/10.3389/fbioe.2021.664188). Thus, the multicellular structure may be a vascularised bone tissue, a vascularised muscle tissue, a vascularised cardiac tissue, a vascularised liver tissue, a vascularised skin tissue, vascularised intestinal villi, vascularised retina tissue, kidney proximal tubule model, or vascularised tumour model. Any of the biofabrication approaches reviewed in Chen et al. (supra) may be used in the context of the present invention. The (original) population of cells may be homogeneous in cell type, morphology, function and/or genomic background, or may comprise cells from different cell types, with different functions, with different morphologies, and/or with different genomic backgrounds. For example, the population of cells may comprise a homogeneous population of pluripotent cells (such as e.g. stem cells, or induced pluripotent stem cells), or a homogeneous population of non-pluripotent stem cells (e.g. primary cells such as vascular cells). Populations of pluripotent cells may be useful for example for the production of organoids. As another example, the population of cells may comprise at least two different population of cells, such as e.g. a main population of cells and a population of feeder cells. This may be useful for example for the production of tissues. As a specific example, skin samples can be obtained from populations of cells comprising fibroblasts and keratinocytes. A multicellular structure typically comprises a plurality of cells at least two of which are of different cell types, morphology and/or function. A multicellular structure typically displays some level of 3D organisation. This may take the form of the presence of 3 dimensional structures such as vessels or other structures with an internal cavity, epithelium, etc. Instead or in addition to this, this may take the form of regions of the 3D structure comprising populations of cells that differ by their cell type, function or morphology. A cell function may refer to any specialised function such as pulsatility, mobility, epithelium or other barrier, secretion, etc.

A non-invasive, non-destructive measurement process refers to a measurement process that is performed on a cell population during the process of cell culture and that does not sample, destroy or significantly damage the cell population. Thus, a non-invasive, non-destructive measurement process is compatible with cell viability as well as use of the product of the maturation process, and can in particular be performed during the process of cell culture (i.e. live) without significantly interfering with the cell population or the maturation process that the cell population is undergoing. In the context of the present disclosure, a non-invasive, non-destructive measurement process typically involves the collection of images of the cell population, without physical interaction with the cell culture itself, using any technology compatible with cell viability preferably over a long period of time (such as multiple days, at least 5 days, at least 10 days, at least 15 days or at least 20 days). Thus, a non-invasive, non-destructive measurement process may be or comprise live cell imaging. By contrast, an invasive or destructive measurement process is a measurement process that requires sampling and/or destruction of the cell population in the cell culture, or significantly damages the population or the multicellular structure. This includes measurement process that require a sampling step (i.e. where at least part of the measurement is performed on a subset of the cell population in the cell culture that is removed from the cell culture), measurement processes that dissociate the cells/tissue and/or fix or otherwise kill the cells (such as e.g. FACS, mass cytometry, immunohistochemistry, cell counting etc.), measurement processes that cause significant damage such as e.g. extensive photobleaching (e.g. continuous / frequent fluorescence imaging, extensive confocal microscopy, etc.).

The methods described herein may use features derived from images of cell cultures obtained using label-free imaging technologies. Label-free imaging technologies are technologies that are able to visualise cells or structures associated with the cells without requiring the presence of labels or markers. Labels or markers are any compound, structure or composition that is or has been added to the cells or the cell culture for the purpose of imaging. Labels and markers are typically not natively present in the cells. Label-free imaging technologies suitable for use according to the present invention include optical microscopy such as phase contrast microscopy and bright-field microscopy, quantitative phase imaging such as holographic microscopy, spectral microscopy such as Raman microscopy, tomographic imaging such as holotomographic imaging or optical tomography (coherence, diffusion or projection), and magnetic resonance imaging. Raman microscopy is a technology where the sample is illuminated with a laser beam and the scattered light from the sample is filtered so that its energy is reflective of the molecular vibrational energy modes of the sample. RAMAN microscopy is a label-free imaging technique that provides some (bio)chemical information of the sample. Holographic imaging is technology where the light phase shift is separated from the intensity to provide complementary information. Holotomographic imaging is a technology where the sample is illuminated from multiple directions and the phase shift created when light passes the sample is used to construct a 3D image. Optical coherence tomography is a technology that uses low coherence light to capture images within optical scattering media such as tissues or cells by interferometry. Magnetic resonance imaging (MRI) is a technology that detects the signal produced by the spin polarisation of certain atoms within cells and tissues (typically hydrogen atoms which are abundant in water and lipids) when exposed to an external magnetic field. MRI has been successfully used to track cellular patterns in the context of bioprinting see e.g. Kérourédan et al. (Sci Rep 8, 15777 (2018)). The features derived from images of cell cultures obtained using label-free imaging technologies are referred to herein as "label-free image-derived features". Some of the above-mentioned technologies can also be used in combination with labels that are visible using the respective imaging technology. For example, optical microscopy can be used in combination with label that are optically visible such as chromogenic labels. As another example, MRI can be used in combination with labelling / contrasting agents such as Micron-sized super-Paramagnetic Iron Oxide (MPIO) particles (used to track labelled cells in vivo in Kérourédan et al. Sci Rep 8, 15777 (2018)), gold-superparamagnetic nanoparticles or multicomponent nanoparticle chains, or polyelectrolyte encapsulated nanoparticles or multicomponent nanoparticle chains (used to examine cells in 3D cell cultures in Jaganathan, Hugar and Ivanisevic, ACS Appl Mater Interfaces. 2011 Apr;3(4):1282-8.).

The methods described herein may use features derived from images of cell cultures obtained using imaging technologies that rely on the presence of labels or markers, instead or in addition to images obtained using label-free imaging technologies. Generally speaking, a label is a compound that is added to a structure to allow identification of the presence of the structure. For example, a cell can be labelled using fluorescent or bioluminescent tags that are expressed by the cell. Such tags may be expressed in association with a particular protein, or in associated with expression of a particular protein (such as e.g. under the control of a particular promoter), such that the expression of the tag is conditional on the expression of the particular protein. This may be used as an indicator of cell type, function, condition, etc. depending on the choice of protein. Alternatively, a cell or structure can be labelled using fluorescent or bioluminescent tags that are associated with affinity binding reagents such as antibodies, nucleic acid probes, etc. These affinity binding reagents can be selected to bind to particular cells, structures, proteins etc., and may therefore also be used as an indicator of cell type, function, condition, etc. As another example, the scaffold can be functionalised by inclusion of compounds that specifically interact with cells such as e.g. cell membranes and emit a detectable signal upon interaction. For example, fluorescent liposomes or fluorescent dyes that interact with lipid bilayers present in cell membranes can be included in the scaffold, for example by mixing them with the bioink prior to forming the scaffold. Functionalisation of the scaffold is not necessarily limited to the inclusion of markers and other functional compounds can be included, such as e.g. growth factors which may be grafted on bioink components. A marker is a compound or structure that is added to a cell culture and that provides an indication of location or physico-chemical environment. The indication of location may relate to the location of the marker itself, or to the location of cells or viable cells. For example, the marker may be one or more beads (such as e.g. silica microbeads) that are visible in images and can be used as a fixed point in images for example to analyse a stack of images or a time course. As another example, the marker may be a cell tracker or other dye that is taken up by cells and can be used to track cells for example to analyse a stack of images or a time course (such as e.g. CellTracker™ dyes available from Thermo Fisher). As another example, the marker may be a dye that is taken up only by a specific subset of cells such as e.g. live cells, or where only a subset of cells are able to process the dye to generate a signal, and that provides an indication of the location of the subset of cells (such as e.g. calcein which is taken up by cells and hydrolysed by live cells to release a fluorescent label). This can also be used to derive an indication of the number of live cells. The marker may itself be a living organism such as a cell. For example, the marker may comprise a population of cells that are genetically modified to emit a signal depending on the local state of the cells. For example, such cells may emit a signal when the cells are stressed, e.g. due to local glucose starvation, low oxygenation, and/or a pH shift. As another example, such marker cells may emit a signal depending on their differentiation state. These cells may represent a proportion of the cell population. The cells may be referred to as "indicator cells". For example, genetically modified cells may be included in the original cell population provided on or in the scaffold. Instead or in addition to this, cells may be modified to emit a signal within the 3D cell culture. This may be achieved for example by including transforming agents such as plasmids or viral particles within the cellularised structure. As another example, a marker may be a nanoparticle that emits a signal depending on the local physico-chemical conditions. For example, nanoparticles that can be used for real time monitoring are reviewed in Bakht et al. (J. Mater. Chem. B., 2021, DOI:10.1039/d1tb00717c). These include e.g. nanoparticles functionalised with oxygen-sensitive indicators for example as described in Trampe et al. (Advanced Functional Materials, Vol. 28, Issue 45, DOI:10.1002/adfm.201804411). As a specific example, the marker may be a nanoparticle that fluoresces depending on the local oxygen (or any other dissolved compound such as $CO_2$, $H_2S$, $H_2O_2$,) and/or pH and/or irradiation level. Imaging technologies that rely on the presence of labels or markers may use the same or different sensors from label-free imaging technologies, depending on the nature of the label or marker. For example, when the markers are beads or nanoparticles that are visible in optical images (such as e.g. nanoparticles as described in US20110177590A1), any optical microscopy technology may be used. Similarly, when the markers are Raman-active nanomaterials, Raman microscopy may be used. As another example, when the beads are magnetic particles, MRI may be used. When the labels or markers are fluorescent, fluorescent microscopy may be used. Fluorescence microscopy may be particularly useful when fluorescently labelled cells are included in the cell population, whether to form part of the mature multicellular structure or as markers, or when fluorescent markers are included in or on the scaffold.

The methods described herein typically use 3D images of cell cultures. 3D images of cell cultures may be obtained using imaging technologies that are natively 3 dimensional, such as holographic imaging or tomographic imaging, or that are extended to 3 dimensions by acquiring images or the sample at different depths and/or from different angles. For example, in the case of optical microscopy and fluorescence microscopy, 3D images may be obtained by acquiring images at multiple focal planes or by using a stereomicroscope acquiring images at different angles. As another example, in the case of Raman spectroscopy, 3D confocal Raman imaging may be used to acquire 2D Raman images from different focal planes within the sample. In the case of MRI, 3D images may be obtained by acquiring images of different depths (slices) within the sample. Thus, a single 3D image may comprise a plurality of 2D images of the same sample or may be a 3D representation that has been reconstructed from a plurality of 2D images of the same sample. Thus, a 3D image may be seen as a data structure that contains information obtained by imaging and that captures signal originating from a sample at different positions in 3 dimensions (typically referred to as x-y-z where z is the depth direction and x-y is a plane orthogonal to the depth direction z). This information may be obtained, stored and/or analysed as a collection of data sets each capturing signal originating from a x-y plane at a different depth. This may also be referred to as a "stack" (or "z-stack") and each individual data set may be referred to as a "slice". Each slice may correspond to an individually acquired 2D image, or may have been obtained by interpolating between 2D images, for example to obtain an isotropic voxel representation. Instead or in addition to this, some information along the depth axis may have been calculated from signal obtained in a single imaging step, such as calculated from the hologram plane in the case of holographic imaging or the refraction or interference of light in the case of tomographic imaging.

Instead or in addition to this, this information may be stored and/or analysed as a summarized 3D image. A summarized 3D image is a data structure of smaller dimensionality than the original 3D image from which it is derived. A summarized 3D image may be obtained by projecting a 3D image down to a single plane. This may result in a data structure that has the same dimensions as a 2D image but where the information for each pixel of the 2D image summarises information from multiple locations captured in the original 3D image. For example, a stack of images may comprise a plurality of images each corresponding to a different location along the z-dimension, and each comprising information for a set of pixels, where each image in the stack comprises information for a set of pixels that correspond to an equivalent set of pixels in the other images in the stack (equivalent pixels), where equivalent pixels are pixels that correspond to the same location in the x-y plane imaged in the stack. Each image in the stack may comprise a value or a vector of multiple values e.g. in the case of multicolour images for all such equivalent pixels. A summarized image may be obtained by summarizing the value or vector of values independently for the equivalent pixels, across the images in the stack, to obtain a single value or vector of value for each summarized pixel corresponding to a location in the x-y plane. This may be performed by summing the values of equivalent pixels, by taking the maximum value across equivalent pixels (also known as max-projection), or using any other method known in the art for processing z-stacked images, including in particular those described in WO2021/216158A. Such procedures may be referred to as "projection" of a 3D image to a 2D representation.

Image-derived features are values that are quantified for an image or set of images using an image analysis algorithm. Each image derived features may comprise one or more numerical values (i.e. an image-derived feature may be a vector or a scalar). Each image-derived feature may be obtained by summarising a scalar or vector of image-derived features over a single image or a plurality of images. The scalar or vector of image derived features may comprise one or more values quantifying an expert-defined visual feature in an image. These one or more values are typically determined as the output of a machine learning algorithm or a computer-vision algorithm that has been specifically developed or adapted to automatically quantify a visual feature. The visual feature may be directly interpretable and visible in the image(s), such as e.g. the location of cells. The expert-defined visual features may be associated with localised cells, clusters of cells or cellular macrostructures. Macrostructures refer to multicellular structures that are at least 50 $\mu$m along at least one dimension. An example of a macrostructure is a vascular network. The expert defined features may be associated with the state or morphology of individual cells, clusters of cells or multicellular structures. Visual features associated with localised cells, clusters of cells or macrostructures may include the count, distribution or density of cells, clusters or macrostructures. Thus, the image-derived features may include, for example, the number and/or distribution and/or density of cells, the number and/or distribution and/or density of cells having a particular phenotype such as cells of a particular cell type, where cell type can be identified based on morphological features and/or cell type labels such as fluorescent labels, cells expressing or associated with a particular label or marker (e.g. a label indicative of viability, stress, health, etc.), the ratio and/or proportion of cells having particular cellular phenotypes, the number and/or size and/or localisation and/or density (in terms of number of cells, surface area, number of pixels, etc.) of groups of cells having particular phenotypes (such as e.g. islands / clusters of cells), etc. For example, cells/clusters may be localized using a label-free cell segmentation algorithm as known in the art, such as e.g. based on artificial neural networks. For instance, a convolutional neural network trained to detect and segment cells/clusters based on previous image datasets annotated with ground truth detections may be used. An example of this is the Mask-RCNN algorithm described in He et al. (Proceedings of the IEEE international conference on computer vision, 2017, pp. 2961-2969). Further, where fluorescently labelled cells are used, the fluorescence signal can be used to aid in the localization of cells and/or identification of cells of different cell types.

Instead or in addition to this, the expert-defined visual features may be associated with the morphology of cells, clusters of cells or cellular macrostructures. For example, the texture of cells, clusters of cells or cellular microstructures may be quantified. This may provide an indication of cell viability. This may be quantified for example using aggregated statistics over the pixels of a cell or cell cluster. Thus, the image-derived features may comprise, for example, the mean, standard deviation, maximum, minimum, predetermined percentile, skewness, normalised weighted centroid, or kurtosis of pixel or voxel intensities for a cell or cell structure may be used. As another example, geometric properties of cells, clusters or macrostructures may be quantified and used as image-derived features. Geometric properties of cells, clusters or macrostructures that may be quantified include their size (quantified as the length of a minor and/or major axis, the characteristic dimension of an equivalent shape such as a circle or sphere, the Feret diameter, etc.), shape (quantified as the similarity to a predetermined shape such as e.g. sphericity, or any parameter that captures features of the shape such as a ratio of the length of a major and minor axis, the number of branches in a vascular network, the eccentricity, roundness, circularity, solidity, aspect ratio of an object, etc), area, volume, or circumference. As a particular example in the case of a macrostructure that has a lumen such as a vascular network or vessel, the diameter or cross section area of the lumen may be quantified. All of these variables may be summarised over a population of observations (cells, clusters, macrostructures, whole image or part thereof) using an aggregate statistic such as a distribution, average, histogram. Alternatively, a plurality of such values may be used as image-derived features, such as e.g. a value for each pixel, voxel, region, predetermined number of observations sampled, etc. Instead or in addition to this, the expert-defined visual features may be associated with spectral characteristics of a cell, cell cluster or structure, where the spectral characteristics are indicative of a phenotype of the cells. The spectral characteristics of cells can be summarised by aggregation of the signal from any spectral imaging method. Aggregation can be performed using a mean, distribution or histogram of the signal associated with individual pixels/voxels. For example, cells or cell structures may be described by a spectral representation obtained by Raman spectroscopy aggregated over the pixels/voxels of a cell or cell cluster. As a specific example, the average spectrum of a cell or cell cluster may be used as an expert-defined visual feature. Summarising a spectral representation over a cell or a plurality of cells (including e.g. over the whole sample or a region thereof) may advantageously capture information that is less subject to bias or noise for example due to local variations. For example, Raman imaging may be used to provide a chemical fingerprint of a sample with spatial resolution. This information can be used, for example, to quantify glucose levels in the samples. Any information that can be quantified using Raman spectroscopy may similarly be used. The full spatial distribution of chemical fingerprint information may be used in some embodiments, while in other the information may be summarised over the whole sample, or partially summarised over specific sections of the sample such as cells or cell clusters. Further, the spectral characteristics of cells, cell clusters or cell structures can be aggregated over a whole image, for example using a mean, distribution or histogram of the signal associated with individual pixels/voxels or cells/cell clusters/cell structures. Any such aggregated statistics may be used as image-derived features.

Instead or in addition to this, the expert-defined visual features may be indicative of the physico-chemical properties of the environment in the cell culture. For example, the intensity of a signal from a marker indicative of one or more physico-chemical properties of the environment in the cell culture may be used as an image-derived feature. This signal may be summarised over a plurality of pixels such as pixels that define subregions of an image, or over an entire image. For example, the sum or mean of a signal over a plurality of pixels may be used as an image-derived feature indicative of the physico-chemical properties of the environment in the cell culture. The marker may be indicative of the local pH, dissolved oxygen, nutrient level, etc. The marker may be associated with a fluorescent or bioluminescent signal. The marker may be present in or on cells, or in or on the scaffold. Quantification of such signals typically does not require the segmentation of cells, cell clusters or cellular macrostructures.

Instead or in addition to this, the expert-defined visual features may be associated with the presence of a label or marker indicative of the phenotype of cells without requiring the localisation of individual cells, cell clusters or macrostructures. For example, a signal associated with a label may be indicative of the cell viability, cell type, etc. Such as signal may be aggregated over a set of pixels to provide an indication of the amount or proportion of cells that have a phenotype associated with the presence of the label or marker. An aggregated metric may be, for example, an average or sum over a plurality of pixels or a whole image. Any such metric whether aggregated or associated with multiple pixels/voxels or regions may be used as an image derived feature.

When using any of these expert-defined visual features, a further signal associated with one or more markers indicative of location may be used. This may aid in the localisation and/or tracking of cells, clusters or macrostructures across a plurality of images of a 3D stack or a plurality of 3D images, for the purpose of quantifying any expert-defined visual features for a particular cell, cell cluster or cellular macrostructure. Thus, in such cases the image-derived features may comprise a quantified value of an expert-defined visual feature, which value may have been obtained using an algorithm that also uses a signal associated with one or more markers indicative of location.

The disclosure relates in particular to the prediction of metrics indicative of the progress or outcome of a maturation process in a 3D cell culture. These may also be referred to as "metrics of interest". These may be metrics that are typically obtained or derived using invasive or destructive measurement processes. For example, a 3D cell culture may be dissociated and/or fixated and/or sectioned to quantify metrics of interest such as using cell sorting, imaging, etc. While some of these metrics could in theory be obtained by direct measurement using non-destructive, non-invasive measurement technologies such as imaging, in practice this is often not feasible to quantify the outcome of a maturation process or its progress beyond a few days as the cell culture is no longer transparent and/or spatial heterogeneity makes it difficult to assess the progress or outcome of maturation based on this data. Thus, the metrics of interest may be metrics that are obtainable or derivable using invasive or destructive measurement processes. Metrics of interest may be selected from: the number of cells in the multicellular structure, the number, percentage or proportion of cells in the multicellular structure that have a particular phenotype (including the number, percentage or proportion of cells of a particular cell type), the number or characteristics of multicellular or macroscopic structures, one or more physical properties of the sample such as porosity (where the porosity of a 3D cell culture can be indicative of the extent of proliferation of the cell population, the production of extracellular matrix which in turns provides an indication of the maturation progress, all of which cause a reduction in porosity of the 3D cell culture as the maturation process progresses, etc.), one or more characteristics of extracellular components of a tissue (such as e.g. extracellular matrix composition, extracellular matrix quantity, extracellular matrix organisation, etc.) or metrics derived therefrom. The number or characteristics of multicellular structures may be selected from: the number of organoids, the size of organoids or groups of cells such as spheroids, the number of branching structures in a vascular network, the size of vessels in a vascular network, etc. Metrics derived from the above may include any score that quantifies the quality of the cell structure for a particular purpose, such as e.g. metrics that compared the above to a corresponding target. When the metric quantifies the outcome of a maturation process, it may relate to the number of cells in the multicellular structure, the number, percentage or proportion of cells in the multicellular structure that have a particular phenotype (including the number, percentage or proportion of cells of a particular cell type), the number or characteristics of multicellular or macroscopic structures, or metrics derived therefrom when assessed at the end of a maturation process. A maturation process may be considered to have reached its end when the cell culture comprises one or more multicellular structures suitable for downstream use. A multicellular structure suitable for downstream used may be defined based on the context. For example, where the downstream use requires organoids, a maturation process may be considered to have reached its end when the cell culture comprises a plurality of organoids (e.g. a predetermined amount or concentration of organoids), when a certain proportion of single cells from the original cell population have formed organoids, wherein the cell culture comprises a plurality of organoids of at least a predetermined size (or any other size-based criteria related to any organoids present in the sample), or when a certain proportion of single cells from the original cell population have formed organoids of at least a predetermined size (or any other size-based criteria related to any organoids present in the sample). As another example, where the downstream use requires the presence of a vascularised tissue, the maturation process may be considered to have reached its end when the cell culture comprises a multicellular structure including a vascular network, and/or a vascular network satisfying one or more predetermined criteria such as e.g. a minimum number of branching points, and/or when the cell culture comprises a desired percentage of cells with vascular markers (as measured using e.g. cytometry) and optionally a desired percentage of other cells such as fibroblasts. Such metrics may also be used to characterise the progress of the maturation process, for example by comparison to a corresponding target metric. For example, the number of cells in the multicellular structure, the number, percentage or proportion of cells in the multicellular structure that have a particular phenotype (including the number, percentage or proportion of cells of a particular cell type, and/or the number, percentage or proportion of cells in the multicellular structure with a first phenotype that co-localise with cells with a second phenotype, such as e.g. number, percentage or proportion of cells or cell structures comprising cells of a first cell type and cells of a second cell type, such as e.g. pericytes surrounding vascular vessels), the number or characteristics of multicellular or macroscopic structures, or metrics derived therefrom may be assessed during a maturation process and compared to a corresponding value or range of values expected at the end of a maturation process or at a particular maturity (where "maturity" can refer to a unit of time since the start of the maturation process / the culture of the cells in or on the 3D scaffold, or to an arbitrary unit of completion of the maturation process such as e.g. a percentage) along the maturation process. As another example, such metrics may be used to characterise the progress of the maturation process by defining a current stage of the maturation process. The stages of a maturation process may be defined based on changes in a series of characteristics that identify intermediate states that are known to occur along the maturation process. The characteristics may be any structural or biochemical characteristic that varies along the maturation process, that can be observed, and that is indicative of progress along the maturation process. For example, the characteristics may include the appearance / disappearance of cells expressing predetermined markers (e.g. cell proteins or antigens) and/or having predetermined morphologies, the presence of particular patterns of presence of compounds (including expression products) within the cells (e.g. transcriptional signatures of stages), metrics indicative of physiological activity (e.g. oxygen uptake), the appearance/disappearance of particular cellular structures (e.g. dendrites), functions (e.g. appearance of contractility), or multicellular structures (e.g. lumen, vessels, cell layer, etc.) and combinations thereof. Thus, a metric of interest may be an identification of the current stage of the maturation process derived from metrics as described above.

A metric of interest may instead or in addition be selected from the latent variables of a statistical model that models the maturation time as a function of a multivariate profile, where the multivariate profile comprises one or more of the image-derived features obtained for a plurality of maturation processes that have been deemed to progress normally. Such an approach may be referred to as "batch evolution modelling", as described further below. The statistical model may be a linear latent variable model such as partial least square (PLS) or orthogonal PLS, as described further below. A maturation process may be deemed to progress normally if it leads to a product that meets predetermined quality criteria defined in a "specification". Thus, a product (3D cell culture) may be associated with a "specification" which provides the values or ranges of values of one or more criteria (in the present context, performance metrics as described above), that the cell culture must comply with in order to be considered acceptable (i.e. in order for the maturation to be considered successful). A product may be referred to as "in-specification" (or "according to specification", "within specification", etc.) if all of these criteria (metrics of interest) comply with a specification (e.g. a user-defined selection of criteria that a matured cell culture should comply with in order or maturation to be considered successful), and "non-specification" (or "out-of-specification") otherwise. Additionally, a metric of interest that is a latent variables of a statistical model that models the maturation time as a function of a multivariate profile may itself be used as a predictive variable of a statistical model (such as e.g. a machine learning model) that predicts a metric that characterises the outcome of a maturation process. In other words, metrics of interest that characterises the progress of a maturation process along a trajectory defined using a batch evolution modelling approach may be used as input to a predictive statistical model that predicts the outcome of the maturation process.

The prediction of metrics indicative of the progress or outcome of a maturation process according to the methods described herein uses image-derived features. In embodiments, additional predictive variables can be used including other parameters, such as measured parameters provided that these are measured using non-destructive, non-invasive technologies. For example, the other predictive parameters may include physico-chemical measurements such as the temperature or one or more properties of the cell culture medium in which the cells are kept, such as bulk dissolved oxygen, amount of a nutrient in the liquid medium added to and/or extracted from the culture, etc. In embodiments, the other parameters do not include process parameters. The term "process parameter" as used herein refers to a parameter that is set by a user/operator of a process, and that characterizes how the process is run. This may include for example the identity of one or more growth factors and/or small molecules and/or nutrients used to control the maturation process, the timing of addition of one or more growth factors and/or small molecules and/or nutrients, the concentration of addition of one or more growth factors and/or small molecules and/or nutrients, the cell seeding density used, etc. Preferably, the prediction of metrics indicative of the progress or outcome of a maturation process according to the methods described herein uses only image-derived features. Indeed, this may enable the same predictive model to be used for different processes that may not be defined or definable by the same set of process parameters.

The prediction of metrics indicative of the progress or outcome of a maturation process as described herein typically uses image-derived features from images acquired at a plurality of time points. For example, images may be acquired at regular intervals such as every hour, every 2 hours, every 4 hours (about 6 times a day), every 6 hours (about 4 times a day), every 8 hours (about 3 times a day), every 12 hours (about twice a day), every day (about once per day), every 2 days, etc. Instead or in addition to this, images may be acquired according to a predetermined schedule, such as e.g. every n hours for the first i days and every m hours for the next j days. Any image acquisition schedule may be used, whether regular or irregular, and whether using a constant or variable scheme along the duration of the methods described herein. In general, an appropriate image acquisition schedule may be determined depending on factors including one or more of: the availability of imaging equipment, the computing resources necessary and available to process and/or store the images or metrics derived therefrom, the dynamics of the process that is being monitored, any effect on the cell culture associated with the image acquisition (e.g. photobleaching), and the additional information (e.g. predictive power) that can be obtained by increasing the amount of image data collected. Image data and/or information derived therefrom (such as image derived features) that relates to a plurality of time points may be referred to as time course data. The use of time course data may advantageously provide information about the rate of change of image derived features derived therefrom, which may provide information about the cell culture that is not available through analysis of single time point data. For example, the impact of a change in medium formulation may not be immediately visible, and the time course of effects may differ between different bioprocesses or different instances of the same bioprocess, such that analysis of data over a plurality of time points following the change in medium formulation may provide more complete and/or more accurate information about this impact. Time course data collected for one or more samples may be in the form of a 3-way matrix of sample x time point x data point(s) where the data point(s) may be one or more images and/or image-derived features. For the purpose of batch evolution modelling, the data may be rearranged into a two way matrix of (sample * time) x data. For the purpose of the prediction of a metric of interest that is indicative of the outcome of the process (e.g. any metric of interest that is an endpoint quality metric as described herein), the data may ne rearranged into a matrix of sample x (data * time), which is an approach referred to as "batch-level modelling" where sample level data is used for modelling to generate sample level predictions.

In the context of the present disclosure, the words "predict", "prediction" and "predictive model" may refer to determining the value of one or more metrics of interest at a current and/or future time point. Thus, the predictions made by the statistical models as described herein may be predictions strictly speaking in that they relate to the expected value of a metric at a future point in time, or they may be predictions in the sense that they determine the value of a metric that is not directly measured and is instead "predicted" on the basis of the values of other metrics (image-derived features). The prediction of metrics indicative of the progress or outcome of a maturation process according to the methods described herein uses a statistical model that takes as an input the image-derived feature(s) and provides as an output the one or more metrics indicative of the progress or outcome of the maturation process. Such as statistical model may have been trained (also referred to as "fitted") using training data comprising the values of predictive variables (including but not limited to the image-derived feature(s)) for one or more 3D cell cultures and optionally the corresponding measured values of the one or more metrics indicative of the progress or outcome of the maturation process to be predicted.

The statistical model may be a regression model. Suitable regression models for used in the context of the present invention may depend on the type and number of the predictive and predicted variables. For example, when the predictive variable (including the image-derived features) that is a scalar numerical value and the predicted variable is also a single scalar variable (metrics indicative of a cell state transition), a single linear regression (also referred to as simple linear regression) may be used. As another example, where the predictive variables include vectors of variables, linear vector-valued regression approaches may be used, such as multiple linear regression, partial least squares regression (PLS) or variants thereof such as orthogonal partial least square regression (OPLS). As another example, non-linear regression methods using a machine learning model (which may comprise a single model or an ensemble of models), such as e.g. random forest regression.

PLS is a regression tool that identifies a linear regression model by projecting a set of predicted variables and corresponding observable variables (predictors) onto a new space. In other words, PLS identifies the relationship between a matrix of predictors $X$ (dimension $mxn$) and a matrix of responses $Y$ (dimension $mxp$) as:

$$X=TP^t+E \qquad (1)$$

$$Y=UQ^t+F \qquad (2)$$

where $T$ and $U$ are matrices of dimension $mxl$ that are, respectively, the $X$ score (projections of $X$ onto a new space of "latent variables") and the $Y$ scores (projections of $Y$ onto a new space); $P$ and $Q$ are orthogonal loading matrices (that define the new spaces and respectively have dimensions $nxl$ and $pxl$); and matrices $E$ and $F$ are error terms (both assumed to be IID - independent and identically distributed - random normal variables). The scores matrix T summarises the variation in the predictor variables in $X$, and the scores matrix U summarises variation in the responses in Y. The matrix $P$ expresses the correlation between $X$ and $U$, and the matrix $Q$ expresses the correlation between $Y$ and $T$. The decomposition of $X$ and $Y$ into a matrix of scores and corresponding loadings is performed so as to maximise the covariance between $T$ and $U$. OPLS is a variant of PLS where the variation in $X$ is separated into three parts: a predictive part that is correlated to Y ($TP^t$ as in the PLS model), an orthogonal part ($T_{orth}P_{orth}^t$ which captures systematic variability that is not correlated to $Y$) and a noise part ($E$ as in the PLS model - which captures residual variation). Partial least squares (PLS) and orthogonal PLS (OPLS) regression (and any other type of regression) can be used to characterise the relationship between label-free image-derived features and other optional predictor variables and metrics associated with a cell state transition process (differentiation efficiency, quality attribute, etc.). This can be performed by fitting an (O)PLS model as described above, with $X$ including the one or more image-derived features that are believed to be predictive of the progress and/or outcome of the cell state differentiation process (and hence predictive of the metrics associated with a cell state transition process), and $Y$ including the corresponding metrics associated with a cell state transition process.

The statistical model may be a latent variable model that models the maturation time as a function of a set of process-related variables comprising the image-derived features. This may also be referred to as a "multivariate model" in the present disclosure. This is typically a linear model such as PLS, OPLS, PCA or principal component regression (PCR). The latent variable model may capture how the covariance structure of the process-related variables varies over time during operation of a process. This may be referred to as a "batch evolution model". The Umetrics® software suite (Sartorius Stedim Data Analytics) includes such "batch evolution models" (BEM) which describe the time-series evolution of process related variables, referred to as the process 'path'. The process paths are obtained by fitting an (O)PLS model as described above, but where $X$ includes the one or more process related variables that are believed to be of potential relevance (including, in the present case, the image-derived features), measured at multiple times (maturity values) over the evolution of the process, and $Y$ includes the corresponding maturity values (time). For example, a set of $n$ process variables may have been measured at $m$ maturity values, and these $nxm$ values may be included as a coefficient in the matrix $X$. The corresponding matrix Vis an $mx1$ matrix (i.e. a vector of length $m$) of maturity values. The $T$ matrix therefore comprises scores values for each of the $m$ maturity values and each of $l$ identified latent variables that describe the aspects of the process related variables that are most correlated with maturity. When using PCR, PCA is applied on the matrix X of process variables at maturities m, and the matrix Y of maturity values is regressed on the principal components thus obtained to identify the principal components most correlated with maturity, the PCA scores representing latent variables describing the aspects of the process variables that are most correlated with maturity. The multivariate model may be a PCA, the PCA scores representing latent variables describing the aspects of the process variables that are most variable across training data acquired at a plurality of maturities. By training the BEM on process paths that resulted in the desired product quality at the end of the process, a "golden BEM" can be defined that describes the range of process paths that are acceptable for a future batch (leading to CQAs within specifications), using the values of the scores in $T$. This enables the monitoring of bioprocesses to know that an ongoing bioprocess is within specification. It also means that if an ongoing bioprocess looks like it will deviate from the accepted range of paths, then an alarm can be raised to the operator to let them know that corrective action needs to be taken. Furthermore, the process related variables that are contributing to the deviation in process condition can be highlighted to the operator (by analysing the variables in $X$ that most contribute to the score in $T$ that has been observed to deviate from the expected course) to assist in diagnosing the problem and identifying the appropriate course of corrective action. This can all be done in real-time. Furthermore, operators only need to consider a small set of summary parameters during normal bioprocess operation with the option to drill-down into specifics with an appropriate subject matter expert only when something is going wrong. In the context of the present disclosure, the values of one or more scores T may be used as a metric of interest. These metrics are indicative of whether the bioprocess is operating normally by comparing the value of these metrics to predetermined values or ranges. For example, this can comprise assessing whether they fall within predefined acceptable ranges of values for a maturity corresponding to the maturity at which the images were acquired from which image-derived features were obtained. For example, the value of one or more latent variables (e.g. scores T) of the multivariate model may be compared to the average value for the latent variable in a set of bioprocesses that are considered to operate normally. A bioprocess may be considered to operate normally if the value of one or more latent variables is within a predetermined range of the average value for the respective latent variables in a set of bioprocesses that are considered to operate normally. The predetermined range may be defined as a function of the standard deviation associated with the average value of the respective latent variables. A bioprocess may be considered to operate normally if the value of one or more latent variables t is within a range defined as average(t)±n*SD(t), where average(t) is the average value of the latent variable t in a set of bioprocesses that are considered to operate normally, SD(t) is the standard deviation associated with average(t), and n is a predetermined constant (which may be the same for the subrange average(t)+n*SD(t) and for the subrange average(t)-n*SD(t), or may differ between these subranges). In embodiments, n is 1, 2, 3 or a value that results in a chosen confidence interval, for example a 95% confidence interval. In embodiments, a bioprocess may be considered to operate normally if the value of one or more latent variables t is within a range defined as a confidence interval, e.g. a 95% confidence interval, around average(t), based on an assumed distribution of t. An assumed distribution may be a Gaussian (normal) distribution, a chi-squared distribution, etc. Where the assumed distribution is a normal distribution, a p% confidence interval (where p can be e.g. 95) may be equivalent to a range of average(t)±n*SD(t), where n is a single value that results in the p% confidence interval (e.g. n may be about 1.96 for a 95% confidence interval). These metrics are further indicative of the effective maturity of the bioprocess, by comparison to the expected values of these scores (for a "normal" bioprocess) as a function of maturity.

The statistical model may be a machine learning model. The term "machine learning model" refers to a mathematical model that has been trained to predict one or more output values based on input data, where training refers to the process of learning, using training data, the parameters of the mathematical model that result in a model that can predict output values that satisfy an optimality criterion or criteria. In the case of supervised learning, training typically refers to the process of learning, using training data, the parameters of the mathematical model that result in a model that can predict outputs values that with minimal error compared to comparative (known) values associated with the training data (where these comparative values are commonly referred to as "labels"). The term "machine learning algorithm" or "machine learning method" refers to an algorithm or method that trains and/or deploys a machine learning model. Regression models can be seen as machine learning models. Conversely, some machine learning models can be seen as regression models in that they capture the relationship between a dependent variable (the values that are being predicted) and a set of independent variables (the values that are used as input to the machine learning model, from which the machine learning model makes a prediction). Any machine learning regression model may be used according to the present invention as a statistical model to predict metrics indicative of the progress or outcome of a maturation process. A model that predicts one or more metrics indicative of the outcome or progress of a maturation process may be trained by using a learning algorithm to identify a function $F: v,p \rightarrow moi_i$ where F is a function parameterised by a set of parameters $\theta$ such that:

$$moi_i \approx \widehat{moi}_i = F(v, p|\theta) \qquad (3)$$

where $\widehat{moi}_i$ is a predicted metric indicative of the progress or outcome of a maturation process (metric of interest), v is a set of image-derived features, p is an optional set of additional predictor variables (such as e.g. a process parameter or the value of one or more latent variable of a latent variable model that models the maturation time as a function of a multivariate profile comprising image-derived features), and $\theta$ is a set of parameters identified as satisfying equation (4):

$$\theta = argmin_\theta L(moi_i, \widehat{moi}_i) \qquad (4)$$

where L is a loss function that quantifies the model prediction error based on the observed and predicted metrics of interest. The specific choice of the function F, parameters $\theta$ and function L as well as the specific algorithm used to find $\theta$ (learning algorithm) depends on the specific machine learning method used. Any method that satisfies the equations above can be used within the context of the present invention, including in particular any choice of loss function, model type and architecture. In embodiments, a statistical model that may be used to predict one or more metrics of interest is a linear regression model. A linear regression model is a model of the form according to equation (5), which can also be written according to equation (5b):

$$Y = X\beta + \varepsilon \qquad (5)$$

$$y_i = \beta_0 + \beta_1 x_{i1} + ..\beta_p x_{ip} + \varepsilon_i \quad i = 1, ..., n \qquad (5b)$$

where Y is a vector with n elements yi (one for each dependent/predicted variable), X is a matrix with elements $x_{i1}..x_{ip}$ for each of the p predictor variables and each of the n dependent variables, and n elements of 1 for the intercept value, $\beta$ is a vector of p+1 parameters, and $\varepsilon$ is a vector of n error terms (one for each of the dependent variables).

In embodiments, a machine learning model is a random forest regressor. Random forest regressors are described in e.g. Breiman, Leo. *"Random forests."* Machine learning 45.1 (2001): 5-32. A random forest regressor is a model that comprises an ensemble of decision trees and outputs a class that is the average prediction of the individual trees. Decision trees perform recursive partitioning of a feature space until each leaf (final partition sets) is associated with a single value of the target. Regression trees have leaves (predicted outcomes) that can be considered to form a set of continuous numbers. Random forest regressors are typically parameterized by finding an ensemble of shallow decision trees. For example, random forests can be used to predict the value of one or more metrics indicative of a cell state transition. In embodiments, a machine learning model is an artificial neural network (ANN, also referred to simply as "neural network" (NN)). ANNs are typically parameterized by a set of weights that are applied to the inputs of each of a plurality of connected neurons in order to obtain a weighted sum that is fed to an activation function to produce the neuron's output. The parameters of an NN can be trained using a method called backpropagation (see e.g. Rumelhart, David E., Geoffrey E. Hinton, and Ronald J. Williams. "Learning representations by back-propagating errors." Nature 323.6088 (1986): 533-536) through which connection weights are adjusted to compensate for errors found in the learning process, in combination with a weight updating procedure such as stochastic gradient descent (see e.g. Kiefer, Jack, and Jacob Wolfowitz. "Stochastic estimation of the maximum of a regression function." The Annals of Mathematical Statistics 23.3 (1952): 462-466).

Suitable loss functions for use in regression problems such as those described herein include the mean squared error, the mean absolute error and the Huber loss. Any of these can be used according to the present invention. The mean squared error (MSE) can be expressed as:

$$L(\cdot) = MSE(moi_i, \widehat{moi}_i) = (moi_i - \widehat{moi}_i)^2 \qquad (6)$$

The mean absolute error (MAE) can be expressed as:

$$L(\cdot) = MAE(moi_i, \widehat{moi}_i) = |moi_i - \widehat{moi}_i| \qquad (7)$$

The MAE is believed to be more robust to outlier observations than the MSE. The MAE may also be referred to as "L1 loss function". The Huber loss (see e.g. Huber, Peter J. "Robust estimation of a location parameter." Breakthroughs in statistics. Springer, New York, NY, 1992. 492-518) can be expressed as:

$$L(moi_i, \widehat{moi}_i | a) = \begin{cases} 0.5(moi - \widehat{moi}_i)^2 & \text{for } |moi_i - \widehat{moi}_i| < a \\ a|moi_i - \widehat{moi}_i| - 0.5a^2 & \text{otherwise} \end{cases} \qquad (8)$$

where $\alpha$ is a parameter. The Huber loss is believed to be more robust to outliers than MSE, and strongly convex in the neighborhood of its minimum. However, MSE remains a very commonly used loss functions especially when a strong effect from outliers is not expected, as it can make optimization problems simpler to solve. In embodiments, the loss function used is an L1 loss function. In embodiments, the loss function used is a smooth loss function. Smooth loss functions are convex in the vicinity of an optimum, thereby making training easier.

In embodiments, a machine learning model comprises an ensemble of models whose predictions are combined. Alternatively, a machine learning model may comprise a single model. In embodiments, a machine learning model may be trained to predict a single metric of interest. Alternatively, a machine learning model may be trained to jointly predict a plurality of metrics of interest. In such cases, the loss function used may be modified to be an (optionally weighted) average across all variables that are predicted, as described in equation (13):

$$L_M(moi, \widehat{moi}) = \frac{1}{n}\sum_{i \in m} \alpha_i L(moi_i, \widehat{moi}_i) \qquad (13)$$

where $\alpha_i$ are optional weights that may be individually selected for each of the metrics $i$, $moi$ and $\widehat{moi}$ are the vectors of actual and predicted metrics/features. Optionally, the values of $moi_i$ may be scaled prior to inclusion in the loss function (e.g. by normalizing so that the labels for all the jointly predicted variables have equal variance), for example to reduce the risk of some of the jointly predicted $\widehat{moi}_i$ dominating the training.

In embodiments, the statistical model is trained to predict one or more metrics of interest at a future time (k+1), based on input values comprising the values of one or more image-derived features obtained from images acquired at one or more time points *k, k-1*, etc. In other words, the training data that is used may be such that the model predictions based on data at one or more time points *k, k-1*, etc. are evaluated against known corresponding values at a time *j > k, k-1,...* In embodiments, the plurality of time points in the input data used for training are separated by one or more predetermined time periods (e.g. 1 hour, 2 hours, 3 hours, 12 hours, 1 day, 2 days, etc.) and/or relate to specific time points in the process (such as e.g. a medium change, a timing of addition of a particular growth factor/small molecule, etc). In a simple example, the statistical model is trained to predict one or more metrics of interest at the end of a cell state transition process (e.g. after 21 days in culture) using features derived from images acquired at any time point before the end of the maturation process (e.g. before 21 days in culture, such as e.g. using data from any one or more of days 1, 2, 3, 4, 5,6,7, 10, 14, etc). In embodiments, the statistical model is trained to predict one or more metrics of interest at a current time point (k), based on input values comprising the values of one or more image-derived features obtained from images acquired at one or more time points *k, k-1*, including the current time point. This may be useful when the metrics of interest are not easily measurable, for example where their measurement would alter the quality of the cell population or multicellular structure derived therefrom.

The time periods (whether between predictive (input) values or between input values and predicted values) may be approximately the same for the whole training data set. Alternatively, the training data may comprise sets of input values and/or input values and corresponding known (label) values that are not separated by the same time difference. For example, the training data may comprise measurements for a plurality of cell cultures, where in some of the plurality of cell cultures data was acquired every day, whereas in others, data was acquired every half day. As another example, the training data may comprise measurements for a plurality of cell cultures, where data was acquired at particular time points in the cell state process, the time points differing between at least some of the plurality of cell cultures. For example, the data may have been acquired at the time of a particular change of medium, which change may have been implemented at different times in the different cell cultures. Preferably, the training data used comprises sets of input values and corresponding label values that are acquired at the same or corresponding times. The model may advantageously be used to predict metrics using features that are associated the same or corresponding times as the timings associated with the metrics and features in the training data. For example, a model trained to predict metrics associated with the end of a maturation process using features of images acquired at the time of a first and second medium change may be used to predict metrics associated with the end of a maturation process using features of label-free images acquired at the time of a first and second medium change.

As used herein, the terms "computer system" of "computer device" includes the hardware, software and data storage devices for embodying a system or carrying out a computer implemented method, such as e.g. for printing a 3D object as part of a 3D printing system. For example, a computer system may comprise one or more processing units such as a central processing unit (CPU) and/or a graphical processing unit (GPU), input means, output means and data storage, which may be embodied as one or more connected computing devices. Preferably the computer system has a display or comprises a computing device that has a display to provide a visual output display (for example in the design of the business process). The data storage may comprise RAM, disk drives or other computer readable media. The computer system may include a plurality of computing devices connected by a network and able to communicate with each other over that network. For example, a computer system may be implemented as a cloud computer. The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

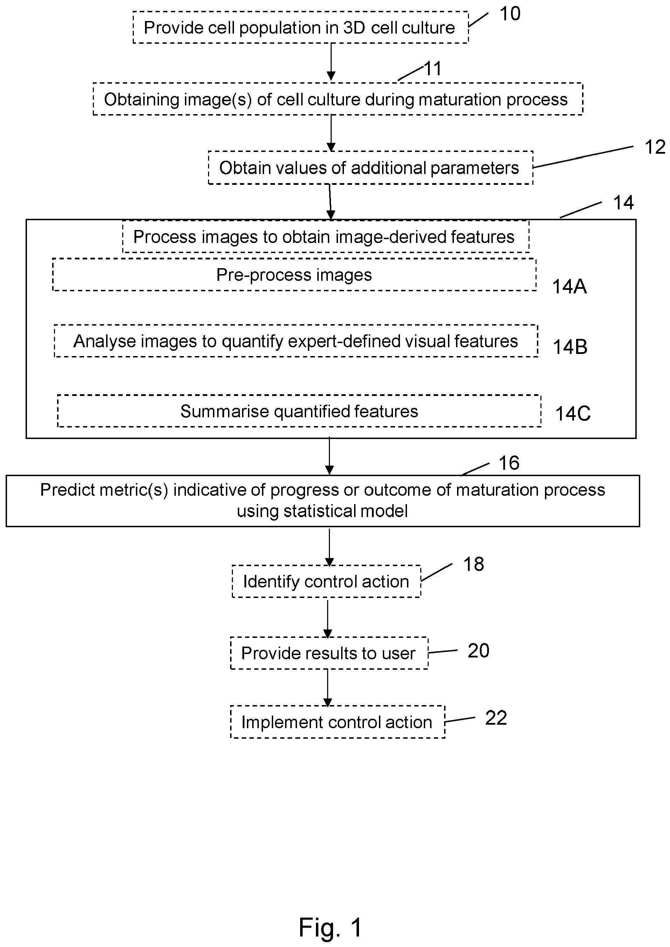

**Figure 1** is a flowchart illustrating a method for monitoring a cell population in a cell culture or for controlling a cell culture or providing a cell population according to a general embodiment of the disclosure. The method may comprise optional step 10 of providing a 3D cell culture, and optional step 11 of obtaining 3D images of the 3D cell. Step 11 may comprising acquiring 3D images of the 3D cell culture. Alternatively, the method may simply comprise receiving, by a computer, images of the 3D cell culture previously acquired, and optionally one or more additional measurements acquired using non-invasive non-destructive measurement technologies (such as e.g. temperature, one or more parameters of the composition of the medium in which the 3D cell culture is maintained, etc.), at step 12. The method further comprises processing the images to obtain a plurality of image-derived features at step 14. A plurality of image-derived features capture more information than a single metric and considering the complexity of the sample and the biofabrication process, this additional level of complexity is believed to be necessary to obtain useful predictions. This may comprise any of the optional step 14A of pre-processing the images such as e.g. by summarising or imputing image data, optional step 14B of using a computer vision algorithm to quantify one or more expert-defined visual features, and optional step 14C of summarising one or more of the plurality of values obtained through steps 14A and/or 14B for a single image or a plurality of images. Step 14B may comprise using information associated with location markers such as e.g. beads to align images or otherwise assign coordinates to locations within images acquired for the same or different 3D cultures. At step 16, one or more metrics indicative of the progress or outcome of the maturation process are predicted using a statistical model that takes as input the values obtained at step 14, and optionally one or more additional measurements obtained at step 12. At optional step 18, a control action may be identified based on the results of step 16. At step 20, the results of any of steps 14, 16 and/or 18 may be provided to a user. At step 22, a control action as identified in step 18 may be implemented.

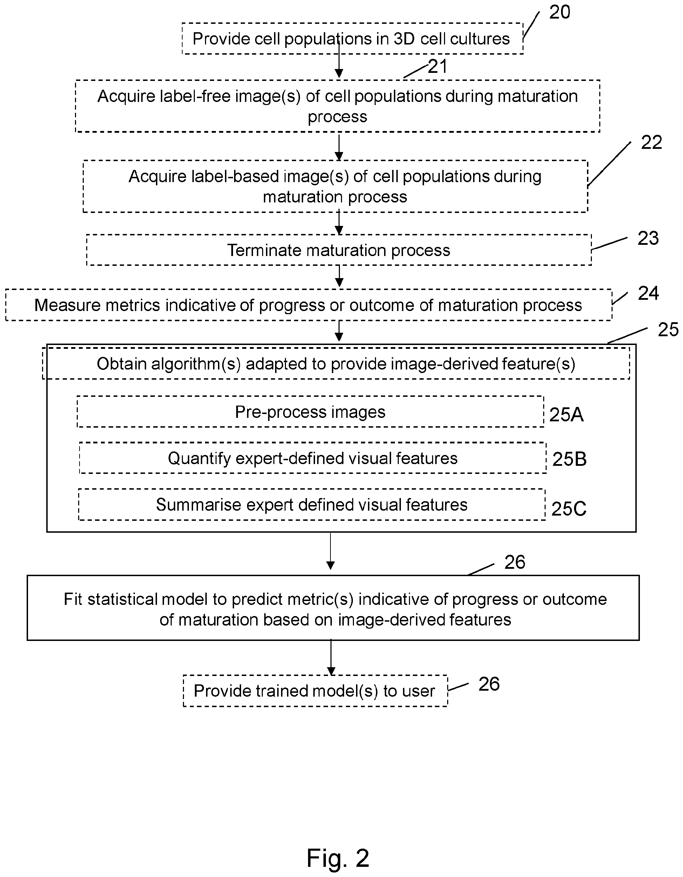

**Figure 2** is a flowchart illustrating a method for providing a tool for monitoring a cell population in a cell culture according to an embodiment of the disclosure. The method may comprise optional step 20 of providing a plurality of cell populations in 3D cell cultures, which may comprise culturing the cell populations in conditions compatible with maturation of the cell populations into multicellular structures, and optional steps 21 to 23 of acquiring training data from the plurality of cell populations. Alternatively, the training data may have been previously acquired and may simply be received by a computer. The optional steps of acquiring training data may comprise step 21 of acquiring images of the cell populations using a label-free imaging technique, step 22 of acquiring images of the cell populations using a label-based imaging technique, such as e.g. fluorescence images, step 23 of terminating the maturation process, and step 24 of measuring one or more metrics indicative of the progress and/or outcome of a maturation process. At step 25, one or more image analysis algorithms adapted to obtain image-derived features quantifying expert-defined visual features are provided.

This may comprise optional step 25A of pre-processing the images obtained at step 21 and/or step 22 (such as for example by summarising a dimension of the 3 dimensional images by projection), optional step 25B of processing the images obtained at step 21 and/or step 22 (or their summarised version obtained at step 25A) to quantify an expert-defined visual feature in the images, and optional step 25C of summarising the expert-defined visual features obtained at step 25B. At step 26, a statistical model is fitted using the values from step 25 (and optionally step 23) to predict the values obtained at step 24. At optional step 26, the statistical model obtained at step 26 and optionally the algorithm(s) used at step 25 are provided to a user.

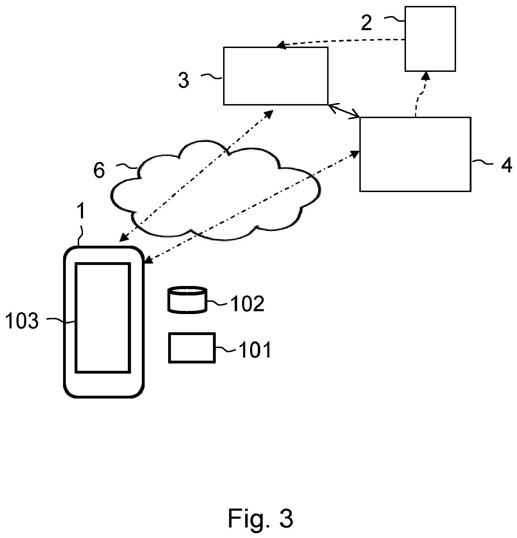

**Figure 3** illustrates schematically an exemplary system according to the disclosure. The system comprises a computing device 1, which comprises a processor 101 and computer readable memory 102. In the embodiment shown, the computing device 1 also comprises a user interface 103, which is illustrated as a screen but may include any other means of conveying information to a user such as e.g. through audible or visual signals. In the illustrated embodiment, the computing device 1 is operably connected, such as e.g. through a network 6, to a cell culture system comprising a cell culture housing 2, one or more sensors 3, and one or more effectors 4. The cell culture housing may be an incubator or any other kind of housing suitable for live cell culture in a culture vessel. The cell culture system may be an integrated system comprising a cell culture housing and at least one sensor, such as e.g. an Incucyte™ live-cell analysis system. Alternatively, the cell culture system may comprise a housing (or a vessel that functions as a housing, such as a bioreactor) and an associated imaging system. The computing device may be a smartphone, tablet, personal computer or other computing device. The computing device is configured to implement a method for monitoring a 3D cell culture, as described herein. In alternative embodiments, the computing device 1 is configured to communicate with a remote computing device (not shown), which is itself configured to implement a method of monitoring a 3D cell culture, as described herein. In such cases, the remote computing device may also be configured to send the result of the method of monitoring a 3D cell culture to the computing device. Communication between the computing device 1 and the remote computing device may be through a wired or wireless connection, and may occur over a local or public network such as e.g. over the public internet. Each of the sensor(s) 3 and optional effector(s) 4 may be in wired connection with the computing device 1, or may be able to communicate through a wireless connection, such as e.g. through WiFi, as illustrated. The connection between the computing device 1 and the effector(s) 4 and sensor(s) may be direct or indirect (such as e.g. through a remote computer). In alternative embodiments, the computing device 1 is configured to implement a method for monitoring a 3D cell culture, as described herein, using images and optional parameters received from a data store or remote computing device (such as e.g. a computing device associated with the cell culture system). Thus, the computing device 1 may not be directly connected to the cell culture system. In such embodiments, the computing device 1 may provide results of the methods for monitoring a 3D cell culture as described herein to a remote computing device or data store. When the results are provided to a remote computing device directly or indirectly associated with the cell culture system, the results may be used by the remote computing device to implement a control action, for example by determining a control action to be implemented based on the results and/or to control the one or more effectors 4 to implement the control action. Similarly, when the computing device 1 is connected to the cell culture system, the computing device 1 may be configured to determine a control action based on the results of the methods for monitoring a 3D cell culture, and to control one or more effectors 4 to implement the control action. The one or more sensors 3 comprise at least one sensor configured to acquire label-free and/or label-based images of one or more cell population(s) in the cell culture housing (such as e.g. an imaging system comprising one or more of a phase contrast microscope, bright-field microscope, fluorescence microscope, Raman microscope, etc.). The sensors 3 may further comprise at least one sensor configured to measure a metric indicative of the progress or outcome of a maturation process, such as e.g. a sensor configured to count cells or the proportion of cells with a particular characteristic in the cell population (e.g. a FACS machine). The one or more effectors 4 may be configured to control one or more process parameters of the cell culture process being performed in the cell culture housing 2. The measurements from the sensors 3 are communicated to the computing device 1, which may store the data permanently or temporarily in memory 102. The computing device memory 102 may store a statistical model and optionally one or more image analysis algorithms as described herein. The processor 101 may execute instructions to predict one or more metrics indicative of a the outcome or progress of a maturation process, and/or to provide a tool for monitoring a 3D cell culture as described herein (such as e.g. by fitting/training a statistical model to predict metrics indicative of the outcome or progress of a maturation process), using the data from the one or more sensors 3, as described herein (such as e.g. by reference to Figure 1 or Figure 2).

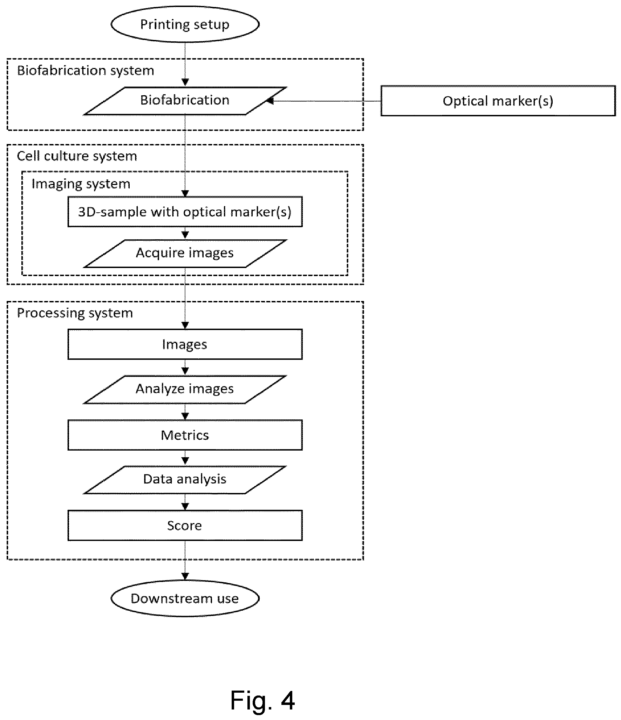

**Figure 4** is a flowchart illustrating a method of monitoring a process for producing a multicellular structure from a cell population in a 3D cell culture, according to an embodiment of the disclosure. In this embodiment, a 3D cell culture is provided by 3D printing. Thus, a 3D printing setup is provided to a biofabrication system, which deposits a 3D cellularised object comprising a cell population and a scaffold, in a cell culture system. For example, the biofabrication system may deposit a bioink comprising cells and a hydrogel matrix according to parameters defined in the printing setup step. Optionally, one or more optical markers may be provided in the biofabrication phase. These may be provided as part of the bioink composition that is deposited, either as an additional ingredient or as an integral part of the hydrogel matrix or the cell population. For example the composition may comprise a functionalised bioink comprising marker nanoparticles that emit a signal depending on their local chemical state (e.g. oxygenation, pH, etc, see e.g. Bakht et al., J. Mater. Chem. B, vol. 9, no. 25, pp. 5025-5038, Jun. 2021; see also US20210164012A1), or chemical molecules that interact with cell membranes or are degraded by the cells, thereby releasing a signal (such as e.g. a fluorescent label) that is indicative of cell location or viability. As another example, the composition may comprise indicator cells (such as e.g. genetically modified indicator cells) that emit a signal (such as e.g. bioluminescence or fluorescence) depending on the local cell state, such as e.g. local stress related to glucose starvation, oxygen starvation, pH related stress, viability (see e.g. Allen et al. Tissue Eng. Part C Methods, vol. 20, no. 10, pp. 806-816, October 2014). The use of indicator cells (also referred to as "reporter cells") may advantageously enable the monitoring of maturation of samples primarily composed of non-reporter cells. This may be advantageous for example where the final sample is usable even in the presence of reporter cells, and/or for process development or optimisation for samples of cells that are not reporter cells. Indeed, a process may need to be developed or optimised for 3D cell culture of cells of interest that are not reporter cells (e.g. because this is not compatible with the final use of the sample or because no reporter cells exist that satisfy one or more criteria for the culture). Developing or optimising such a cell culture process using only a different type of cells (reporter cells) may not result in a process that is suitable or optimal for the culture of the cells of interest. Indicator cells may be interspersed at random in the 3D cell culture. Alternatively, indicator cells may be included in specific regions of the 3D cell culture, for example by selective deposition during 3D printing. As another example, the composition may comprise microbeads that are identifiable by imaging during histology of the mature sample and/or in images acquired during the maturation process. Microbeads that are identifiable by imaging during the cell culture process may be used to define a coordinate system, for example to align images as described above. Further, the microbeads may also be identifiable by imaging during histology of the mature sample, and this may be used to align images obtained during the maturation of the sample to the histology images of the mature sample, or otherwise localise corresponding structures or regions in the histology images and images obtained during maturation. This may be used for example to predict or otherwise relate localised metrics of interest derived from histology with localised expert defined features derived from imaging of the sample during culture. For example, this may be used to identify whether cells differentiate slower than expected in a local region of the sample during on-line measurement, by directly correlating imaging data at that location with the resulting local phenotype as described by histology. This may be particularly advantageous when it is not convenient, desirable or possible to maintain the orientation of 3D cell cultures during maturation and between maturation and assessment of the mature sample. The 3D cell culture is then maintained in the cell culture system in conditions compatible with maturation of the cell population, and images are acquired by the imaging system during the maturation of the sample. The images may be acquired at multiple time points during the maturation, such as for example at regular intervals or predetermined time points, from the start of the maturation process and until the 3D cell culture is not longer transparent enough to obtain useful information. This time may be provided as a predetermined time (e.g. expert defined) depending on the imaging set up and the cell culture that is being monitored. Alternatively, the images may be acquired and automatically analysed for suitability. This may be determined for example using an algorithm adapted to classify images between a class of images that is suitable for further downstream analysis and a class of images that is not suitable for further downstream analysis for example because the images are not transparent enough. Such a classifier may use a training set of images that have been expert annotated to be associated with the first or second category. Such an algorithm may quantify texture in the images and/or use an unsupervised image analysis algorithm such as a convolutional neural network trained to learn image features. The images may be acquired using label-free imaging technologies and/or label-based imaging technologies, such as e.g. one or more of basic light microscopy (e.g. brightfield or phase contrast microscopy, which may be acquired in 3D by acquiring images at multiple focal planes or by using a stereomicroscope acquiring images at different angles), spectral microscopy such as RAMAN microscopy (where the sample is illuminated with a laser beam and the scattered light from the sample is filtered so that its energy is reflective of the molecular vibrational energy modes of the sample), holographic imaging (such as quantitative phase imaging where, contrast to conventional phase contrast microscope, the light phase shift is separated from the intensity to provide complementary information), tomographic imaging (such as holotomographic imaging where the sample is illuminated from multiple directions and the phase shift created when light passes the sample is used to construct the 3D-image or optical coherence tomography), magnetic resonance imaging, fluorescence imaging, etc. When multiple types of images are acquired, such as e.g. when both label-free images and label-based images are acquired or when multiple label-free or label-based imaging technologies are used, only one of the types of images must comprise a 3D image. In other words, one or more sets of images may be acquired using one or more different imaging technologies, at least one of the set of images comprising 3D images. 3D images are images of a sample that comprise signals corresponding to different locations of a sample that are not all within a single plane. Thus, 3D images of a sample are images that may be acquired at different depths and/or from different angles. The images are provided to a processing system that analyses them using one or more image analysis algorithms configured to derive image-derived metrics. These image-derived metrics (also referred to herein as image-derived features) together for a multivariate representation of the sample that are indicative of sample status. Prior to the analysis to obtain image-derived metrics, the images may be preprocessed. For example, a stack of images comprising information for multiple focal planes along the z-dimension (also called a "z-stack") may be subject to compression and/or interpolation. For example, the z-dimension may be projected down to a single plane to obtain an image equivalent to a 2D image. As another example, the stacks may be interpolated into an isotropic voxel representation. The choice of preprocessing may depend on the image analysis algorithm that is used. For example, when the image analysis algorithm is designed to process 2D images, one or more equivalent 2D images obtained by projection and/or subsampling may be used. As another example, when the image analysis algorithm is designed to process 3D images that comprise isotropic voxels, the image may be processed by interpolation and/or subsampling to obtain information or isotropic voxels. Further, the choice of preprocessing and subsequent image analysis algorithm (i.e. use of algorithms designed to process 2D or 3D images) may depend on factors such as the performance of the prediction method using 2D vs 3D images, available computing resources etc. For example, where the prediction accuracy of the methods described herein is not significantly impacted by the use of 2D equivalent or subsampled images for one or more imaging modalities and/or one or more image analysis algorithms, then the approaches using 2D equivalent or subsampled images may be used. Conversely, when the prediction accuracy of the methods described herein is significantly impacted by the use of 2D equivalent or subsampled images (instead of the full information content in the 3D images) for one or more imaging modalities and/or one or more image analysis algorithms, then the approaches using 3D or interpolated images may be used. Image-derived metrics may be based on localised cells, clusters of cells or macrostructures, where the cells/clusters of cells/macrostructures are localised using e.g. a cell segmentation algorithm based on artificial neural networks (e.g. a convolutional neural network such as Mask-RCNN trained to detect and segment cells/clusters based on previous image datasets annotated with ground truth detections) and/or a fluorescent signal allowing labelled cells to be localised and optionally allowing different cell types to be quantified independently. Cell segmentations algorithms may use label-free and/or labelled images (e.g. fluorescence images). Using the localised cell / cell cluster / macrostructure information (such as e.g. one or more masks indicating the location of cells, clusters of cells, cells/clusters of cells with particular phenotypes e.g. cells with a particular morphology, label, size, etc., and/or macrostructures), one or more expert-defined metrics are quantified such as the count, distribution, density of the localised features. Instead or in addition to this, when indicator cells and/or markers of the local physico-chemical state are present in the sample, one or more image-derived metrics may be based on localised or non-localised signal associated with the indicator cells and/or markers. For example, the oxygenation status or pH at different locations in the sample (such as e.g. for each of a plurality of predetermined regions, which may correspond to voxels or points on a grid or may correspond to any predetermined regions of the sample) may be computed based on a signal from indicator cells or markers. As another example, the overall physico-chemical conditions in the sample may be quantified based on a signal from indicator cells or markers without specific localisation, such as e.g. summarising the signal over an entire image. Instead or in addition to this, image-derived metrics may be based on the morphologies of cells, clusters of cells or macrostructures. This morphology may be indicative of viability, health or function of the cells or multicellular structure. For example, the morphology of cells or clusters of cells may be calculated as different order statistics aggregated over the pixels/voxels of each cell/cluster. For instance, the mean, standard deviation, maximum, minimum, predetermined percentile, skewness, normalised weighted centroid, kurtosis, etc. of the pixel/voxel intensities. Such metrics may be indicative of e.g. texture of the cells or clusters of cells, which may provide an indication of cell viability or health. As another example, the morphologies may be calculated as geometric measurements of the cell/cluster/structure size and shape. For instance, the area/volume, circumference, minor/major axes etc. may be quantified for any cell, cluster or structure. This may provide an indication of the type of cells, clusters or macrostructures present in the 3D cell culture as well as their properties. When the structure comprises a vascular network, the morphologies may be calculated as the number of branches in the network and/or the diameter of vessels. When spectral imaging is used, cells, clusters of cells or macrostructures may be described using a spectral representation aggregated over the pixels/voxels of each cell, cluster of cells or macrostructure. For example, a cluster may be represented by its average spectrum. Further, such signals may be averaged over an entire image for example using any summary statistic such as a mean, distribution or histogram of the spectral signal. Having obtained a plurality of image-derived metrics forming a multivariate representation of the sample, this is used as an input to a statistical model that uses this information to provide one or more scores that are indicative of the performance of the maturing sample (i.e. one or more metrics of interest that are indicative of the progress or outcome of the maturation process). This may comprise using machine learning/multivariate data analysis to model the multivariate behavior of the maturation during "normal" operations. For instance, the multivariate metrics may be modelled using a batch evolution modelling (BEM) approach, where a linear latent variable model such as orthogonal partial least squares is used to model the maturation time as a function of the multivariate profile. BEM describes how the covariance structure of the multivariate profile varies over time during normal operations. Monitoring how the covariance changes is more sensitive to process anomalies compared to monitoring metrics individually. The step of predicting the metrics of interest may instead or in addition comprise predicting the properties of the multivariate sample as a function of the multivariate profile, where the properties as characteristics that are determined by fixating, embedding, sectioning, staining, dissecting and/or other processing the mature sample for histological study. During histology, properties such as porosity, cell type distribution, and volume may be quantified.

Such properties may be used as labels in a training data set comprising corresponding images acquired for the same process during maturation, to train a machine learning algorithm (in its simplest form, a multivariate regression model) to predict the properties from a multivariate representation comprising image-derived metrics. When beads are present in the sample as markers, these may be used to improve the image analysis process. For example, when constructing a training dataset of multiple 3D samples that are matured, these may include beads that may be used as keypoints to virtually align the samples in 3D-space using keypoint matching. In other words, the samples may be virtually rotated and shifted in 3D until the location of the beads matches as closely as possible between aligned samples. Keypoint matching algorithms may allow some degree of flexibility such that the location of the beads in the samples to be aligned only has to be determined approximately. Beads may be positioned at controlled locations within a 3D culture, for example using 3D printing. The advantage of 3D-alignment is that it introduces a standard axis, meaning that directions are comparable across samples. This gives the opportunity to quantify more fine-grained image-derived metrics, by for instance quantifying the growth along a certain axis or cell density in a certain region in 3D-space. Instead or in addition to this, if the beads are identifiable during histology the image representation during monitoring can be aligned in 3D-space to the histology representation. This allows localized predictions of the mature sample, where for instance the cell density and viability at a certain location during maturation is predictive of the cell type distribution and/or porosity in the corresponding location during histology. In other words, the metrics of interest that are predicted may be localized, i.e. may comprise a plurality of values for one or more of the metrics, each of the value associated with a different location of the 3D cell culture.

The methods described herein find application in a variety of context. For example, the methods described herein can be used to predict the efficiency of maturation process (e.g. provision of a vascularised tissue, provision of a population of organoids) using label-free live cell imaging, thereby enabling non-invasive and real time monitoring. When the prediction is performed at the end of the cell state transition, the methods remove the need of using invasive analysis processes that involve the addition of chemical dyes or inclusion of additional genetic manipulation to the cells, the use of destructive techniques and instruments (e.g. FACS) or the use of wavelengths and intensities of light that might impact on the cell health or biochemistry (e.g. phototoxicity) to quantify efficiency. Further, the predictions may inform control decisions (e.g. timing or concentration of added growth factors, time point for arresting the maturation process) to improve the expected outcome of the maturation process or shorten the amount of process time (time where the cells are maintained in cell culture) to obtain a matured multicellular structure. Additionally, the predictions may enable optimisation of a biofabrication and/or maturation process without the need to complete a full maturation process and/or maintain the 3D cell culture until such a time as maturation can be expected to be completed. As a specific example, the methods may be used to identify when the maturation process can be considered to be completed according to one or more metrics of interest. The maturation process may therefore be interrupted at this time, rather than having to keep the cells in culture for long enough to maximise the chances of the maturation process having reached completion. Any amount of time that is saved in this process, for example because an indication of the outcome of the maturation process can be obtained prior to the completion of the maturation process, or because the completion of the maturation process can be identified without interrupting the cell culture, can result in significant time and resources savings. These may compound in the context of optimisation where many different parameters for biofabrication and/or cell culture may need to be tested.

The present methods have several advantages. As explained above, the large combinatorial space of possible printing parameter configurations combined with long bioprocess maturation times makes experimentation to identify optimal printing and maturation conditions difficult. Thus, many prior approaches have focused exclusively on optimizing the printing parameters based on the direct product of the printing. This does not take into account the long term effects of any process parameter on the final product of the biofabrication process, i.e. a matured structure. By contrast, the methods described herein quantify a multivariate set of sample health parameters (density, viability, etc.) over time using images and analyzing the multivariate profile over time to quantify the performance of not only the printed sample but the maturation process as a whole. Growth medium composition, for instance, is a key component in successful maturation of the printed sample and the impact of medium only becomes apparent by studying the sample over time. Additionally, any model that predicts e.g. cell viability based on printing parameters or other process parameters uses a fixed number of parameters meaning that investigating a new type of process will require recalibration of all models, which in turns entail more experimentation. For instance, if a new media trace element addition is investigated, several experiments are required to investigate its interaction with other parameters. Since the methods described herein quantify the impact based on imaging during maturation, the same model can be used without recalibration even if new process parameters are included, at least if they do not cause fundamentally new morphological phenotypes (which is unlikely for the vast majority of process conditions that are optimized since new morphological phenotypes may fundamentally change the nature of the multicellular products generated). Furthermore, since the methods described herein use image data and only observe the effect of process parameters, they can exploit that many process combinations will likely incur similar morphological responses for more efficient learning. Thus, it may be advantageous for the statistical model to use as input a multivariate representation of the sample that comprises image-derived metrics but that does not comprise process parameters such as e.g. printing parameters. It may further be advantageous for the statistical model to be a fully data-driven model, i.e. a model that provides a prediction based on image derived metrics and one or more other optional measured parameters. Such a model advantageously does not include any mechanistic equations or model capturing assumptions about the 3D cell culture such as e.g. the growth of the cell population, cell-cell interactions, etc. In some embodiments, the use of labels / markers that function as optical sensors provide additional information of for instance the chemical environment within the sample during maturation, without requiring the use of invasive and/or destructive technologies to access that information.

The methods described herein allow the monitoring of a 3D cell culture process, to make sure that the process falls within prespecified limits. The advantages of the methods described herein are most prominent when the multivariate time profile during maturation is linked to the mature sample quality, i.e. when the image-derive metrics are used to predict one or more metrics indicative of the outcome of the maturation process. Predicting final quality based on the monitoring allows both early quality control of the process, i.e. the possibility to abort an experiment likely to fall outside quality specification, as well as making interventions during the maturation process to increase likelihood of high quality, by e.g. making growth factor additions. The prediction of the outcome of the maturation process also adds the possibility to correct for printing process variance, such as variance in the printed sample structure, viability, and density, using model predictive control. Finally, the methods described herein do not require direct integration with the printing process and in particular are applicable to any biofabrication process regardless of the printing or deposition process used, including e.g. molding, offering flexibility in relation to the printing process or equipment is used. This is in stark contrast with any approach that uses printing parameters as part of a predictive model.

The following is presented by way of example and is not to be construed as a limitation to the scope of the claims.

### *Examples*

Exemplary methods of monitoring a process for producing a multicellular structure from a cell population in a 3D cell culture will now be described. In particular, the examples below demonstrate the use of the methods of the invention to predict xxx in a 3D printed sample, directly from label-free microscopic images.

### *Materials and Methods*

*Bioink formulation.* Stock solutions can be prepared as follows. Fibrinogen stock solution can be prepared by dissolving 8% w/v Fibrinogen from bovine plasma (F8630-1G, Merck) in DMEM without calcium (Gibco). Alginate stock solution can be prepared by dissolving 4% w/v Alginate (Alginic acid sodium salt very low viscosity, A18565.36, Alfa Aesar) in DMEM without calcium (Gibco). Gelatin stock solution can be prepared by dissolving 20%w/v Gelatin from porcin skin (Sigma Aldrich, G1890) in DMEM without calcium (Gibco). A bioink formulation as described in US 2019/0002836 with varying ratios of gelatin, alginate and fibrinogen can be prepared from these solutions, including e.g. a final concentration in the bioink of 2%w/v Fibrinogen, 2%w/v Alginate, and 4%w/v Gelatin. In particular, a ratio of gelatin and alginate can be varied to investigate the impact of this on cell organisation. Single cells can be mixed with this formulation and homogenized by carefully pipetting 10 times with a viscous-liquid pipet. The bioink is then typically incubated 10 min at 37°C before printing or moulding.

*Printing.* The above bioink was printed by pneumatic microextrusion or moulded as parallelepiped objects with x-y dimensions of 1cm × 1cm and thickness of 0.1 cm, 0.2 cm or 0.4 cm.

*Consolidation.* The bioprinted tissues can be consolidated with a solution of $CaCl_2$ (C5670-500G, Merck), transglutaminase (TAG) (ACTIVA WM, Ajinomoto) and thrombin (Thrombin from bovin plasma, t4648-10KU, Merck) in deionized water. Ranges of concentrations from 0.03 to 3% w/v $CaCl2$ and from 0.2 to 4% transglutaminase were tested, together with 10 U/mL of Thrombin, in order to investigate the impact of reticulation on osteoblasts cell organisation. The consolidation process is typically carried out at 37°C for about 1 hour. The consolidated cellularised structures are then typically rinsed twice with sterile physiological serum at a ratio of 10 mL physiological serum for 1mL of tissue.

*Cells and culture.* Osteoblasts cells were labelled with 25 μM of CellTracker green (ThermoFisher). Microvascular cells (HMEC-1 cell line, a human microvascular endothelial cell line) were labelled with 25 μM of CellTracker red (ThermoFisher). Cellularised structures were prepared including dissociated osteoblasts only, dissociated vascular cells only, dissociated osteoblasts and vascular cells, and no cells as a control. All samples were cultured in 50% DMEM HOb (DMEM/F-12) + 50% EGM-2 (endothelial cell growth medium-2), in the Incucyte® S3 live-cell analysis system.

*Cell monitoring.* The cell cultures are monitored with Incucyte® over 21 days with fluorescent acquisition live imaging once a day. After 21 days of culture, confocal microscopy is used to detect osteocytes and vascular structures by labelling the former with a PHEX-specific antibody and the latter with an endothelium-specific antibody (EN4). Phase contrast and/or brightfield images may also be acquired in a similar manner. This may be useful for example when unlabelled cells are analysed. In general, unlabelled cells can be identified, localized and/or categorized using these images based on their morphology. In the present example, only two types of cells are expected, both of which are labelled with respective fluorescent markers, and hence label free images were not used.

### *Example 1 - Prediction of differentiation into osteocytes*

In this example, the inventors demonstrate how an embodiment of the invention can be used to monitor the maturation of a 3D printed sample comprising osteoblasts and microvascular cells from fluorescence microscopic images, in this case widefield fluorescence microscope images.

### Image acquisition

To acquire images in the Incucyte we use z-sweep stacks of images similar to those described in Forsgren et al. (Forsgren, E., Edlund, C., Oliver, M., Barnes, K., Sjogren, R., & Jackson, T. R. (2022). High-throughput widefield fluorescence imaging of 3D samples using deep learning for 2D projection image restoration. bioRxiv). This was demonstrated to work well on samples up to at least 1.5mm thick. Imaging is performed using the motorized widefield fluorescence microscope within the Incucyte® S3 Live-cell imaging system (Sartorius).

The sample volume is collected as a step-wise image series, where the camera repeats a plane-by-plane sequence of moving upward $25\mu$m along the z-axis starting from the bottom of the microwell, at each location pausing to acquire an image with a 50 ms exposure time. Because the optimal Nyquist sampling rate is impractical and results in substantial photobleaching, the z-step distance is selected to be within the depth-of-field of the objective (DOF=$25.3\mu$m) in order to balance sampling rate and axial resolution. To minimize shot noise, we can acquire multiple (e.g. 3) consecutive frames and average them together before moving to the next z-location. We then repeat this sequence throughout the entire volume.

### Image analysis - segmentation

To segment objects and assign their z-location and creating a course 3D-map of the cells within the sample, we use a workflow comprising a detection step and a render step, described in detail below.

An alternative implementations of such a two step process is described in Salvi et al. (Salvi, M., Morbiducci, U., Amadeo, F., Santoro, R., Angelini, F., Chimenti, I., ... & Molinari, F. (2019). Automated segmentation of fluorescence microscopy images for 3D cell detection in human-derived cardiospheres. Scientific reports, 9(1), 1-11). This uses confocal microscopy and a combination of a membrane dye and a nuclear dye such that the detection and render steps comprise a membrane detection/render and a cell nuclei detection/render steps. The detection steps use respective object-based detection approaches in each image of the stack, and the 3D rendering steps combine the segmentation masks from the detection step and the original image stack, showing the segmentation masks at the z-location they were detected.

The present approach uses a cytoplasmic dye for object detection from widefield fluorescence microscopy. In particular, objects are first segmented at each focal plan using standard watershed segmentation. The z-location of all fluorescent objects are then determined by using a neighborhood-based texture filter. That is, for each plane in the z-stack the local texture of each pixel is determined by for instance calculating the pixel intensity standard deviation in a 5x5 pixel square around the pixel. Each object's z-location is then determined as the plane in the z-stack where the object has the highest texture, based on the average of the pixel intensity standard deviation for the pixels in the object. The rationale is that out-of-focus objects display little texture, whereas in-focus objects display more texture. Thus, this procedure identifies the likely true z-location of each object even though objects will be visible in the in-focus frame as well as one or more above and under the focus plane.

Note that this approach may not result a complete and/or precise 3D-map of all objects due to widefield fluorescence being limited in this regard. Indeed, because widefield fluorescence illuminates the whole sample from a single direction, the images may suffer from point spread function-artefacts (where out-of-focus objects cause blurry regions to appear in images) and objects with the same x/y locations but different z locations may not all be visible depending on their respective sizes. This is in contrast to e.g. confocal microscopy which focuses light on a single x/y/z location at a time, thereby obtaining improved x/y resolution as well as z resolution. However, confocal microscopy is considerably more expensive, larger and less widely available, and had additional downsides for live cell imaging such as e.g. photobleaching / photodamage. The present inventors have found that standard widefield microscopy can still be used to obtain an approximate description (more coarse 3D map than could be obtained with confocal microscopy) during cultivation using the Incucyte® in a straightforward manner, and that this was sufficient to enable the monitoring of maturation of a £D cell culture as described herein.

**Image analysis - expert defined metrics**

The morphology of each detected object is then described using a set of morphological descriptors such as those described in Edlund et al. (Edlund, C., Jackson, T. R., Khalid, N., Bevan, N., Dale, T., Dengel, A., ... & Sjogren, R. (2021). LIVECell-A large-scale dataset for label-free live cell segmentation. Nature methods, 18(9), 1038-1045). Specifically, each object is described by its size (area, perimeter, Feret's diameter), fluorescence intensity (mean; minimum; maximum; P5, fifth percentile; P95, 95th percentile) and intensity distribution (skewness, kurtosis, normalized weighted centroid (NWC)), texture (standard deviation of intensity (STD)), and shape (eccentricity, roundness, circularity, solidity and aspect ratio (AR)).

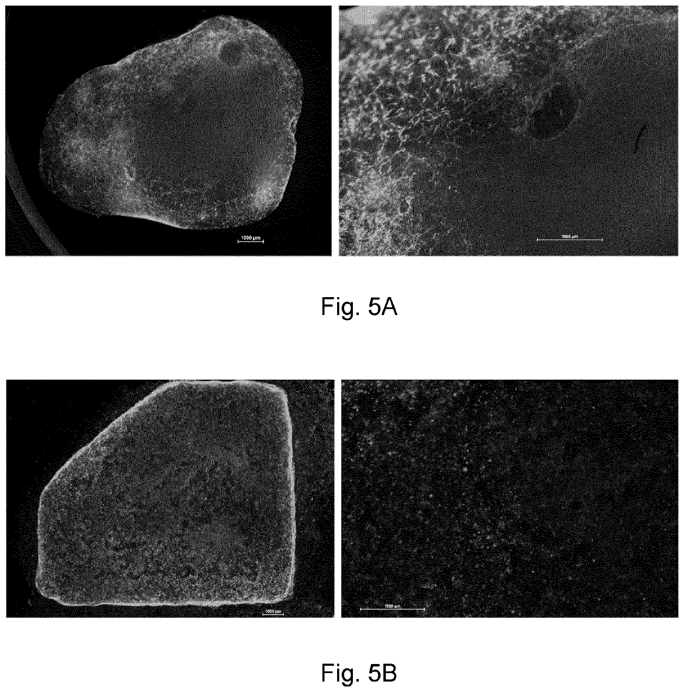

Using these metrics we can define expert-defined descriptors of the samples. In the printed bone tissue, osteoblasts successfully differentiated into osteocytes display filamentous morphologies (see Figure 5A) and can be detected as low circularity/high eccentricity objects. In comparison, osteoblasts show smaller and rounder morphology (see Figure 5B). In this way, we can approximately quantify the ratio of successfully differentiated osteoblasts (osteocytes) to (undifferentiated) osteoblasts. For example, this can be quantified as the ratio of the number of objects considered to have low circularity/high eccentricity to the number of objects considered to have higher circularity and/or a smaller size. These objects can be identified for example by performing a principal component analysis of all of these metrics for all objects identified in the images, identifying clusters of objects and assigning thresholds in the PCA score space to distinguish between types of cells.

We can also quantify different cell populations across the volume. For instance, in Figure 5B we see that the 1X image is homogenously covered by cells, which corresponds to an overgrowth of endothelial cells. This can be quantified by smoothing the 1X image, segmenting the complete sample, and calculating the within sample fluorescence mean standard deviation (or any other metric of variability over the whole sample, such as interquartile range). The smoothing step enables to reduce small scale variation (e.g. individual cells) and efficiently show differences on a large scale (e.g. to identify any dark core region that may be present). Without smoothing, dark spots are likely to be present between individual cells, which make it harder to identify large areas with different overall intensities. If the within-sample standard deviation is large after smoothing, it shows that there are both dark and bright regions whereas a high mean combined with low standard deviation indicates homogenous expression across the volume. Thus, the within sample standard deviation of fluorescence intensity and optionally the mean fluorescence intensity represent expert derived features associated with the location of groups of cells. In this example these provide an indication of the presence or absence of an overgrowth of endothelial cells. This can provide for example an indication of whether vascularization is observed in all tissues including in particular bone tissue.

Further expert-defined metrics may be quantified, chosen to capture features of vascular structures such as e.g. number of branching points, presence of objects with a lumen, etc.

**Downstream data analytics**

Images are acquired for multiple samples. Then, for each of these, each image at each timepoint is described using the above defined expert derived features. In this example, these are the ratio of differentiated osteoblasts for each image, and the within sample standard deviation across the volume (or any other approach to quantify large scale inhomogeneities providing an indication of whether the image is overgrown). This enables to model normal sample cultivation using multivariate data analysis. For instance, by using batch evolution modelling on successful cultivation runs we can describe the "golden batch" of cultivations. Future cultivations can then be compared to the golden batch in order to determine whether the cultivation is likely to be successful during the experiment. This allows for rapid feedback during for instance media development, where we do not need to wait for the full-time course of the experiment to decide whether the run is likely to fail.

Furthermore, we can collect one or more end point measurements such as confocal microscopy images providing ground truth measurements of successful differentiation into osteocytes and vascularization, metrics from any histology protocol or cell dissociation and quantification protocol. An example of end point assessment of vascularized skin tissue is described in Baltazar et al. (Tissue Engineering Part A, Vol. 26, No. 5-6, doi.org/10.1089/ten.tea.2019.0201), where confocal microscopy is used to analyse thin sections of paraffin embedded tissues, using specific immune-labelling of endothelial cells (e.g. CD31 labeling). These measurements can be quantified manually or automatically, for example using image analysis approaches known in the art, or flow cytometry / cell sorting data analysis approaches known in the art. We can then calibrate batch level models based on the image-derived features over time to predict said measurements. For example, a statistical model such as an artificial neural network or linear model can be used to predict end point metrics based on the monitoring based metrics (i.e. expert defined features). This therefore provides an online estimation of the likely outcome of maturation. Thus, if the printed samples are cultivated under diverse conditions (such as the bioink and formulation factors varied in the protocol), we can predict the end-point measurements based on the image-derived features for quality control without having to perform confocal microscopy enabling other endpoint experiments such as drug screening or other complementary or confirmatory endpoint measurements such as dissociation protocols or histology.

The statistical model may predict end point metrics from a fitted batch-level model using the whole time trajectory from start to end of observation of the sample. When a complete time trajectory corresponding to the fitted batch-level model is not available, such as e.g. when predicting end point metrics at a time point earlier than the end of the time trajectory with which the batch level model was fitted, imputation by regression may be used to impute the missing time points in the time trajectory. Thus, it is possible to use imputation by regression during the experiment to predict what the future trajectory of image-derived features is likely to look like based on the measurements collected up to the current point. Combined with batch level modeling, this allows to predict the future degree of differentiation and vascularization to a finer degree than just whether we are likely to fail, allowing for rapid and more detailed feedback. Fitting of batch level models for any multivariate data set and/or imputation by regression (where in this case the variables include one or more image-derived metrics) can be performed using Simca-Online from Sartorius Data Analytics.

*Equivalents and Scope*

All documents mentioned in this specification are incorporated herein by reference in their entirety.

Unless context dictates otherwise, the descriptions and definitions of the features set out above are not limited to any particular aspect or embodiment of the invention and apply equally to all aspects and embodiments which are described.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein. It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about" or "approximately", it will be understood that the particular value forms another embodiment. The terms "about" or "approximately" in relation to a numerical value is optional and means for example +/- 10%.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps. Other aspects and embodiments of the invention provide the aspects and embodiments described above with the term "comprising" replaced by the term "consisting of" or "consisting essentially of", unless the context dictates otherwise.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention. For the avoidance of any doubt, any theoretical explanations provided herein are provided for the purposes of improving the understanding of a reader. The inventors do not wish to be bound by any of these theoretical explanations. Any section headings used herein are for organizational purposes only and are not to be construed as limiting the subject matter described.

**Claims**

1. A method for monitoring a process for producing multicellular structures from a cell population in a 3D cell culture, the method including the steps of:

   obtaining one or more images of the 3D cell culture that are acquired by imaging the cell culture at different depths and/or from different angles,
   processing the one or more images to obtain a plurality of image-derived features,
   determining the value of one or more metrics indicative of the progress or outcome of the maturation process using a statistical model adapted to predict the values of the one or more metrics indicative of the progress or outcome of the maturation process using inputs comprising the plurality of image-derived features.

2. The method of claim 1, wherein obtaining one or more images of the 3D cell culture comprises obtaining a plurality of images acquired at a respective plurality of time points during the maturation process of the cell population, optionally wherein the statistical model is adapted to predict the values of one or more metrics indicative of the progress or outcome of the maturation process using inputs comprising the plurality of image-derived features obtained at a plurality of time points during the maturation process, and/or
wherein a maturation process is a process whereby a population of cells comprising individual cells or groups of cells undergo proliferation and specialisation to produce a multicellular structure, and/or wherein the method further comprises maintaining the cell culture in conditions compatible with maturation of the cell population, optionally wherein the 3D cell culture is maintained in culture for at least 5, at least 10, at least 15 or at least 20 days and/or wherein one or more images of the 3D cell culture are acquired after 1 day, 2 days, 3 days, 4 days, 5 days, 10 days, 15 days, or at regular intervals while the cell culture is maintained in conditions compatible with maturation of the cell population for at least 5 days, at least 10 days, at least 15 days, at most 20 days, at most 25 days, at most 30 days or at most 35 days.

3. The method of any preceding claim, wherein a multicellular structure is a structure comprising a plurality of cells with one or more functionalities or structural properties that are absent in the original cell population from which the multicellular structure was derived and/or a structure comprising a plurality of cells at least some of which have different cell type, morphology, and/or function, and/or

   wherein a 3D cell culture comprises a 3D scaffold and a cell population cultured at least partially embedded in 3D scaffold,
   optionally wherein the multicellular structure is a tissue, organ, spheroid or organoid, and/or wherein the scaffold is a matrix of optically transparent biomaterial, and/or wherein the scaffold is a hydrogel scaffold, and/or wherein the 3D cell culture has been obtained by forming a 3D structure from a composition comprising a cell population and a scaffold material.

4. The method of any preceding claim, wherein the images are obtained using one or more technologies selected from: optical microscopy, fluorescence microscopy, spectral microscopy, holographic imaging, tomographic imaging, quantitative phase imaging, and magnetic resonance imaging, optionally wherein the optical microscopy is phase contrast microscopy or brightfield microscopy, and/or wherein the spectral microscopy is Raman microscopy, and/or wherein the holographic imaging is quantitative phase imaging, and/or wherein the tomographic imaging is holotomographic imaging or optical coherence tomography, and/or
wherein the images comprise label-free images and/or label-based images that provide a signal indicative of the spatial configuration, health, or physiological properties of cells, groups of cells or multicellular structures, wherein the signal is associated with the cells themselves.

5. The method of any preceding claim, wherein the images comprise label free images and/or label based images that provide a signal indicative of the presence of one or more markers or labels that are not associated with the cells themselves,

   optionally wherein the labels or markers are indicative of the location within the 3D cell culture and/or the local chemical or physiological state within the 3D cell culture; and/or
   wherein the labels or markers are selected from: nanoparticles and/or chemical compounds associated with the scaffold of the 3D cell culture and providing a signal indicative of the their local chemical or physiological state, indicator cells that are added to the cell population in the 3D cell culture or that are modified within the 3D cell culture and providing a signal indicative of their local physico-chemical or physiological state, beads that are added to the 3D cell culture and provide a signal indicative of location within the 3D cell culture.

6. The method of any preceding claim, wherein processing the one or more images to obtain a plurality of image-derived features comprises using one or more computer vision algorithms to obtain a plurality of values quantifying respective expert-defined visual features in the one or more images,

   optionally wherein the expert-defined visual features are selected from:

      features associated with localised cells, clusters of cells or macrostructures,
      features associated with the morphology of cells, clusters of cells or macrostructures,

features associated with the spectral characteristics of a cell, cell cluster or macrostructure, where the spectral characteristics are indicative of a phenotype of the cells, and

features associated with the local chemical or physiological state in the cell culture and/or

wherein each image-derived feature comprises one or more values quantifying an expert-defined visual feature in an image, or a summarised value derived therefrom.

7. The method of claim 6, wherein features associated with localised cells, clusters of cells or macrostructures are selected from:

the number, distribution, density of cells, groups of cells or macrostructures,
the number, distribution or density of cells, groups of cells or macrostructures having a particular phenotype,
the ratio or proportion of cells having a particular phenotype, optionally wherein the method comprises using a computer vision algorithm to localise cells, clusters of cells, macrostructures or cells, clusters of cells or macrostructures having a particular phenotype, and/or
wherein features associated with the morphology of cells, clusters of cells or macrostructures are selected from:

metrics indicative of the texture of the cells, clusters of cells or macrostructures such as the mean, standard deviation, maximum, minimum, predetermined percentile, skewness, normalised weighted centroid, or kurtosis of pixel or voxel intensities for a cell, cluster of cells or macrostructure,
metrics indicative of the geometry of cells, clusters of cells or macrostructures, optionally wherein the metrics indicative of the geometry are selected from size, shape, area, volume, circumference, sphericity, eccentricity, roundness, circularity, solidity, aspect ratio, number of morphological features such as branches in a network, and one or more dimensions of lumens in macrostructures, and/or
wherein the features associated with the spectral characteristics of a cell, cell cluster or macrostructure comprise a summarised spectral representation obtained by aggregation over the pixels or voxels of a cell, cluster of cells or macrostructure, wherein the spectral representation captures signals indicative of markers or chemical compounds visible in spectral imaging.

8. The method of claim 6 or claim 7, wherein the expert-defined visual features comprise one or more values associated with the local chemical or physiological state in the cell culture, wherein the one or more values comprise the intensity of a signal from a marker indicative of one or more physico-chemical or physiological properties of the environment in the cell culture, optionally wherein the marker is selected from nanoparticles and/or chemical compounds associated with the scaffold of the 3D cell culture, and indicator cells, and/or
Wherein the expert-defined visual features comprise one or more values that are associated with locations defined at least in part by reference to the location of one or more visual markers of location, optionally wherein the visual markers of location are beads that are added to the 3D cell culture.

9. The method of any preceding claim, further comprising one or more of:

obtaining a summarised image for at least one of the one or more images, wherein obtaining a summarised image comprises pre-processing the image by projection to obtain a corresponding 2D equivalent image, subsampling the image, summarising information across a plurality of pixels in the image, optionally wherein summarising information across a plurality of pixels comprises obtaining a summary statistic such as a mean, distribution histogram, maximum, minimum, predetermined percentile, skewness, normalised weighted centroid, kurtosis, standard deviation of the signal for each of the plurality of pixels,
obtaining an enriched image for at least one of the one or more images, wherein obtaining an enriched image comprises imputing the signal for at least a plurality of pixels not measured in the image, optionally wherein imputing the signal comprises interpolating the signal for said plurality of pixels, and/or wherein imputing the signal comprises obtaining a 3D image with an isotropic voxel representation, and/or
filtering images to remove uninformative images, optionally wherein filtering images comprises using a machine learning algorithm trained to identify uninformative images based on training images and/or based on a texture filter.

10. The method of any preceding claim, wherein the one or more metrics indicative of the progress or outcome of the maturation process are scores indicative of the current or future maturation status of the 3D cell culture, wherein the status of the 3D cell culture refers to the quality of the mature structure for a particular purpose, the relationship to a normal or ideal maturation process, the maturation progress along previously established maturation timeline, and/or

wherein the metrics of interest are selected from: the number of cells in the multicellular structure, the number, percentage or proportion of cells in the multicellular structure that have a particular phenotype, the number or characteristics of macrostructures in the multicellular structure, one or more physical properties of the 3D cell culture such as porosity, characteristics of extracellular components of the multicellular structure, metrics that are indicative of one or more properties of the multicellular structure and that are not directly measurable using non-destructive, non-invasive measurement technologies, latent variables of a statistical model that models the maturation time as a function of a multivariate profile, where the multivariate profile comprises one or more of the image-derived features obtained for a plurality of maturation processes that have been deemed to progress normally, or metrics derived therefrom, and/or

wherein the metrics of interest comprise a plurality of values for one or more of the metrics, each of the value associated with a different location of the 3D cell culture.

11. The method of any preceding claim, wherein the statistical model comprises a latent variable model that models the maturation time as a function of a set of variables comprising the image-derived features, and/or

wherein the statistical comprises a machine learning model, and/or

wherein the statistical model has been adapted to predict the value of one or more metrics indicative of the progress or outcome of the maturation process by fitting or training the model to perform such predictions using training data, the training data comprising images of a plurality of 3D cell cultures comprising a cell population undergoing a maturation process, the images being images acquired by imaging the 3D cell cultures at different depths and/or from different angles, or the values of one or more image-derived features obtained by processing said images, wherein the images relate to cell cultures that are deemed to operate normally and/or wherein training data comprises corresponding values of one or more metrics indicative of the progress or outcome of the maturation process, wherein the values are measured values or values derived from measured values obtained through invasive or destructive measurement processes.

12. The method of any preceding claim, wherein the statistical model does not use as input any feature obtained using an invasive or destructive measurement process, and/or any process parameter,

wherein the statistical model further uses as input one or more measurements that are acquired without using an invasive or destructive measurement technique,

wherein the statistical model only uses image-derived features or features derived therefrom, wherein the statistical model uses as input the value of one or more latent variables from a model that models the maturation time as a function of a set of variables comprising the image-derived features,

wherein the statistical model comprises a multivariate model that directly uses as input image-derived features, wherein the method does not comprise the use of a mechanistic model that models cell growth, interaction or physico-chemical processes in the cell culture,

wherein the statistical model makes prediction in a completely data-driven manner, and/or

wherein the statistical model may comprise a model that models the maturation time as a function of a set of variables comprising the image-derived features, and a model adapted to predict the value of one or more metrics indicative of the outcome of the maturation process based on inputs comprising one or more latent variables of the model that models the maturation time as a function of a set of variables comprising the image-derived features, optionally wherein the model that models the maturation time as a function of a set of variables comprising the image-derived features is a batch level model and/or wherein the model adapted to predict the value of one or more metrics indicative of the outcome of the maturation process is a machine learning model.

13. A method for providing a tool for monitoring a process for producing a multicellular structure from a cell population in a 3D cell culture, the method comprising:

(i) obtaining a training data set comprising: images of a plurality of 3D cell cultures comprising a cell population undergoing a maturation process, wherein the images are images acquired by imaging the 3D cell culture at different depths and/or from different angles, or the values of one or more image-derived features obtained by processing said images; optionally wherein the training data set further comprises corresponding values of one or more metrics indicative of the progress or outcome of the maturation process, wherein the values are measured values or values or values derived from measured values obtained through invasive or destructive measurement processes, and/or wherein the images relate to a plurality of 3D cell cultures comprising a cell population undergoing a maturation process that is considered to have progressed normally;

(ii) obtaining an image analysis algorithm adapted to process images to obtain the one or more image-derived features, and

(iii) providing a statistical model that predicts the values of the one or more metrics indicative of the progress or outcome of the maturation process in the training data using inputs comprising the one or more image-derived features from the training data,

optionally wherein the inputs of the statistical model do not include any feature obtained using an invasive or destructive measurement process, wherein the method further comprises one or more of: providing the statistical model to a user, data storage device or computing device, providing the image analysis algorithm to a user, data storage device or computing device, and/or

wherein obtaining a training data set comprises identifying one or more metrics that characterise the progress and/or outcome of the particular maturation process, identifying one or more image-derived features that are predictive of one or more metrics indicative of the progress and/or outcome of the maturation process, identifying one or more further measurements that are predictive of one or more metrics indicative of the progress or outcome of the maturation process, acquiring the one or more images of the 3D cell culture using a label-free or label-based imaging technique, measuring the corresponding values of one or more metrics indicative of the progress or outcome of the maturation process or values from which such metrics can be derived, and/or culturing the plurality of cell populations, and/or wherein the 3D cell culture comprises one or more labels or markers that are not associated with the cells themselves and that are indicative of location within the 3D cell culture and/or of the local chemical or physiological state within the 3D cell culture, and/or

wherein the method includes any of the features of claims 1 to 13.

14. A method of producing one or more multicellular structures, the method comprising:

providing a 3 dimensional cell culture comprising a cell population in or on a 3 dimensional scaffold;

culturing the 3 dimensional cell culture in conditions suitable for the cell population to undergo a maturation process; and

monitoring the cell population during the maturation process using the method of any of claims 1 to 12;

optionally wherein the method further comprises implementing one or more control actions based on the predicted metrics indicative of the progress or outcome of the maturation process, optionally wherein the control action is selected from: addition of a compound or composition to the cell culture, change of the liquid medium in the cell culture, modifying a scheduled time and/or concentration of addition of a compound or composition to the cell culture.

15. A system for monitoring a process for producing multicellular structures from cell populations in a 3D cell culture and/or for providing a tool for monitoring a process for producing multicellular structures from a cell population in a 3D cell culture and/or for producing multicellular structure from a cell population in a 3D cell culture and/or for controlling a process for producing a multicellular structure from a cell population in a 3D cell culture, the system comprising:

at least one processor; and

at least one non-transitory computer readable medium containing instructions that, when executed by the at least one processor, cause the at least one processor to perform the method of any of claims 1 to 14;

optionally wherein the system comprises one or more of: a cell culture environment, one or more sensors, and one or more effectors.

Provide cell population in 3D cell culture — 10

↓

Obtaining image(s) of cell culture during maturation process — 11

↓

Obtain values of additional parameters — 12

↓

14

Process images to obtain image-derived features

Pre-process images — 14A

Analyse images to quantify expert-defined visual features — 14B

Summarise quantified features — 14C

↓

16

Predict metric(s) indicative of progress or outcome of maturation process using statistical model

↓

Identify control action — 18

↓

Provide results to user — 20

↓

Implement control action — 22

Fig. 1

Provide cell populations in 3D cell cultures / 20

Acquire label-free image(s) of cell populations during maturation process / 21

Acquire label-based image(s) of cell populations during maturation process / 22

Terminate maturation process / 23

Measure metrics indicative of progress or outcome of maturation process / 24

Obtain algorithm(s) adapted to provide image-derived feature(s) / 25

Pre-process images 25A

Quantify expert-defined visual features 25B

Summarise expert defined visual features 25C

Fit statistical model to predict metric(s) indicative of progress or outcome of maturation based on image-derived features / 26

Provide trained model(s) to user / 26

Fig. 2

Fig. 3

Fig. 4

Fig. 5A

Fig. 5B

Europäisches
Patentamt

European
Patent Office

Office européen
des brevets

# EUROPEAN SEARCH REPORT

Application Number

EP 22 30 6652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/284574 A1 (WAGNER MATTHIAS [US] ET AL) 8 September 2022 (2022-09-08) | 1-15 | INV.<br>G06T7/00 |
| Y | * abstract *<br>* paragraph [0006] *<br>* paragraph [0176] *<br>* paragraph [0406] – paragraph [0407] *<br>* paragraph [0412] – paragraph [0422] *<br>* figures 26, 57 * | 1-15 | |
| Y | US 2020/218874 A1 (KOH LIE YONG JUDICE [SG] ET AL) 9 July 2020 (2020-07-09)<br>* abstract *<br>* paragraph [0009] *<br>* paragraph [0036] – paragraph [0037] *<br>* paragraph [0042] – paragraph [0043] *<br>* paragraph [0049] – paragraph [0050] *<br>* paragraph [0060] *<br>* figures 7, 11 * | 1-15 | |
| Y | WANG YICHUN ET AL: "3D cell cultures toward quantitative high-throughput drug screening",<br>TRENDS IN PHARMACOLOGICAL SCIENCES, ELSEVIER, HAYWARTH, GB,<br>vol. 43, no. 7, 30 April 2022 (2022-04-30)<br>, pages 569-581, XP087093007,<br>ISSN: 0165-6147, DOI:<br>10.1016/J.TIPS.2022.03.014<br>[retrieved on 2022-04-30]<br>* abstract *<br>* Box 1 *<br>* figures 1, 3 * | 1-15 | TECHNICAL FIELDS SEARCHED (IPC)<br><br>G06T |

-/--

The present search report has been drawn up for all claims

| Place of search | Date of completion of the search | Examiner |
|---|---|---|
| Munich | 30 March 2023 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

**EP 22 30 6652**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/046520 A1 (GUILLEMOT FABIEN [FR] ET AL) 13 February 2020 (2020-02-13)<br>* abstract *<br>* paragraph [0001] *<br>* paragraph [0026] *<br>* paragraph [0085] *<br>* paragraph [0143] - paragraph [0149] *<br>* figure 4 *<br><br>----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 30 March 2023 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6652

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | | | Publication date | Patent family member(s) | | | Publication date |
|---|---|---|---|---|---|---|---|
| US 2022284574 | A1 | | 08-09-2022 | US | 2022282201 | A1 | 08-09-2022 |
| | | | | US | 2022282202 | A1 | 08-09-2022 |
| | | | | US | 2022282203 | A1 | 08-09-2022 |
| | | | | US | 2022282223 | A1 | 08-09-2022 |
| | | | | US | 2022284574 | A1 | 08-09-2022 |
| | | | | WO | 2022192157 | A1 | 15-09-2022 |
| US 2020218874 | A1 | | 09-07-2020 | CN | 111194407 | A | 22-05-2020 |
| | | | | SG | 11202001087R | A | 30-03-2020 |
| | | | | US | 2020218874 | A1 | 09-07-2020 |
| | | | | WO | 2019035766 | A1 | 21-02-2019 |
| US 2020046520 | A1 | | 13-02-2020 | CN | 110402283 | A | 01-11-2019 |
| | | | | EP | 3596197 | A1 | 22-01-2020 |
| | | | | ES | 2903369 | T3 | 01-04-2022 |
| | | | | FR | 3063930 | A1 | 21-09-2018 |
| | | | | JP | 2020512013 | A | 23-04-2020 |
| | | | | KR | 20190130605 | A | 22-11-2019 |
| | | | | US | 2020046520 | A1 | 13-02-2020 |
| | | | | WO | 2018167401 | A1 | 20-09-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019002836 A1
- US 20110177590 A1
- WO 2021216158 A
- US 20210164012 A1
- US 20190002836 A

### Non-patent literature cited in the description

- **ZHANG et al.** *Nat. Rev. Methods Primer,* 20 November 2021, vol. 1 (1
- **YU ; JIANG.** *Int. J. Bioprinting,* January 2020, vol. 6 (1), 253
- **NG et al.** *Prototyp,* July 2020, vol. 15 (3), 340-358
- **KÉROURÉDAN et al.** *Sci Rep,* 2018, vol. 8, 15777
- **JAGANATHAN ; HUGAR ; IVANISEVIC.** *ACS Appl Mater Interfaces.,* April 2011, vol. 3 (4), 1282-8
- **BAKHT et al.** *J. Mater. Chem. B.,* 2021
- **TRAMPE et al.** *Advanced Functional Materials,* vol. 28 (45
- **HE et al.** *Proceedings of the IEEE international conference on computer vision,* 2017, 2961-2969
- **RUMELHART, DAVID E. ; GEOFFREY E. HINTON ; RONALD J. WILLIAMS.** Learning representations by back-propagating errors. *Nature,* 1986, vol. 323 (6088), 533-536
- **KIEFER, JACK ; JACOB WOLFOWITZ.** Stochastic estimation of the maximum of a regression function. *The Annals of Mathematical Statistics,* 1952, vol. 23 (3), 462-466
- Robust estimation of a location parameter. **HUBER, PETER J.** Breakthroughs in statistics. Springer, 1992, 492-518
- **BAKHT et al.** *J. Mater. Chem. B,* June 2021, vol. 9 (25), 5025-5038
- **ALLEN et al.** *Tissue Eng. Part C Methods,* October 2014, vol. 20 (10), 806-816
- **FORSGREN, E. ; EDLUND, C. ; OLIVER, M. ; BARNES, K. ; SJOGREN, R. ; JACKSON, T. R.** High-throughput widefield fluorescence imaging of 3D samples using deep learning for 2D projection image restoration. *bioRxiv,* 2022
- **SALVI, M. ; MORBIDUCCI, U. ; AMADEO, F. ; SANTORO, R. ; ANGELINI, F. ; CHIMENTI, I. ; MOLINARI, F.** Automated segmentation of fluorescence microscopy images for 3D cell detection in human-derived cardiospheres. *Scientific reports,* 2019, vol. 9 (1), 1-11
- **EDLUND, C. ; JACKSON, T. R. ; KHALID, N. ; BEVAN, N. ; DALE, T. ; DENGEL, A. ; SJOGREN, R.** LIVECell-A large-scale dataset for label-free live cell segmentation. *Nature methods,* 2021, vol. 18 (9), 1038-1045
- **BALTAZAR et al.** *Tissue Engineering,* vol. 26 (5-6